(19) **Europäisches Patentamt / European Patent Office / Office européen des brevets**

(11) **EP 4 496 209 B1**

(12) **EUROPEAN PATENT SPECIFICATION**

(45) Date of publication and mention
of the grant of the patent:
**29.07.2026 Bulletin 2026/31**

(21) Application number: **22932053.6**

(22) Date of filing: **16.03.2022**

(51) International Patent Classification (IPC):
***H02P 21/22*** *(2016.01)* ***H02P 29/024*** *(2016.01)*
***B62D 5/04*** *(2006.01)*

(52) Cooperative Patent Classification (CPC):
**H02P 21/22; H02P 29/027; B62D 5/046**

(86) International application number:
**PCT/JP2022/011916**

(87) International publication number:
**WO 2023/175774 (21.09.2023 Gazette 2023/38)**

(54) **CONTROL DEVICE FOR AC ROTATING MACHINE, AND ELECTRIC POWER-STEERING DEVICE**

STEUERUNGSVORRICHTUNG FÜR EINE WECHSELSTROMDREHMASCHINE UND
ELEKTRISCHE SERVOLENKVORRICHTUNG

DISPOSITIF DE COMMANDE POUR MACHINE TOURNANTE À COURANT ALTERNATIF ET
DISPOSITIF DE DIRECTION ASSISTÉE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.01.2025 Bulletin 2025/04**

(73) Proprietor: **MITSUBISHI ELECTRIC
CORPORATION
Chiyoda-ku
Tokyo 100-8310 (JP)**

(72) Inventors:
• **MORI, Tatsuya**
**Tokyo 100-8310 (JP)**
• **SAWADA, Kenta**
**Tokyo 100-8310 (JP)**

• **FUJIMOTO, Chiaki**
**Tokyo 100-8310 (JP)**
• **NAKAYA, Hirotaka**
**Tokyo 100-8310 (JP)**
• **ISHIKAWA, Kosuke**
**Tokyo 100-8310 (JP)**
• **HARADA, Shingo**
**Tokyo 100-8310 (JP)**

(74) Representative: **Hoffmann Eitle
Patent- und Rechtsanwälte PartmbB
Arabellastraße 30
81925 München (DE)**

(56) References cited:
**EP-B1- 3 290 296     JP-A- 2003 088 193
JP-A- 2007 274 863     JP-A- 2007 274 863
JP-A- 2009 189 146     JP-A- 2020 167 820
JP-A- H1 198 900**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

[Technical Field]

The present disclosure relates to a control device for an alternating current (AC) rotating machine, and an electric power-steering device.

[Background Art]

Patent Document 1 discloses technology related to so-called non-interference control for compensating for interference terms on two rotational axes (for example, d- and q-axes) in vector control for an AC rotating machine.

Specifically, in FIG. 2 of Patent Document 1, an interference component (vd_i, vq_i) is calculated based on an electric current command value (Id*, Iq*), the number of interlinked magnetic fluxes $\phi$, and an angular velocity $\omega$. That is, for the calculation of the interference component, an induced voltage term ($\omega \times \phi$) is considered. The control based on this calculation is not based on a deviation between the electric current command value and an electric current (Id, Iq), so it corresponds to so-called feedforward control.

In contrast, in FIG. 3 of Patent Document 1, an interference error correction voltage (vd_c, vq_c) is calculated based on a deviation between the electric current command value (Id*, Iq*) and the electric current (Id, Iq). The control based on this calculation is based on a deviation between the electric current command value and the electric current, so it corresponds to so-called feedback control.

[Citation List]

[Patent Document]

[Patent Document 1]
Japanese Unexamined Patent Application, First Publication No. 2010-119245

From JP 2009-189146 A an electric motor control device for a three-phase AC synchronous motor is known, having an inverter, a three-phase current detection means for detecting an AC current flowing through each phase, a q-axis command value calculation means for calculating a q-axis voltage command value by PI control from a target q-axis current and the actual q-axis current so that the difference between them becomes small, and a calculation means for calculating a d-axis voltage command value from the target d-axis current and the actual d-axis current. The q-axis command value calculation means and the d-axis command value calculation means include a gain changing means for changing a P gain and an I gain of the PI control when the motor torque is larger than a predetermined value, compared to when the motor torque is smaller than the predetermined value. Below the predetermined value, the proportional gain Kp and the integral gain Ki in the feedback control by the PI control calculation are set to large values. Furthermore, when the predetermined value is exceeded, the proportional gain Kp and the integral gain Ki are switched to smaller values. From JP 2007-274863 A an electric drive controller is known, comprising a means for calculating first and second current command values based on an electric machine target torque indicative of the target value of torque of an electric machine, a means for calculating first and second deviations between the first and second current command values and a current supplied to the electric machine, a means for calculating first and second voltage command values based on the first and second deviations, and a means processing weak field control by altering the first and second current command values upon occurrence of voltage saturation. When predetermined correction conditions are satisfied during weak field control, the voltage command value calculating means calculates the first and second voltage command values based on the first and second deviations.

[Summary of Invention]

[PROBLEM TO BE SOLVED BY THE INVENTION]

In the disclosure of Patent Document 1, compensation for the induced voltage term ($\omega \times \phi$) is performed only in the feedforward control, and compensation in the feedback control is not performed. In the induced voltage term ($\omega \times \phi$), the angular velocity $\omega$ is obtained by performing calculation (differential or difference) based on a signal indicating the rotor position of the AC rotating machine. Here, noise contained in the signal indicating the rotor position may appear as a high-frequency component with the angular velocity $\omega$. As a countermeasure against it, when non-interference control is performed using a result when the angular velocity $\omega$ is made to pass through a low-pass filter, interference compensation may not be properly performed due to a response delay in the low-pass filter. In particular, when the angular velocity $\omega$ rapidly decreases, the induced voltage term ($\omega \times \phi$) in interference compensation should rapidly decreases, but the response delay in the low-pass filter may cause the excess of the electric current (Id, Iq).

Moreover, the actual numerical value of the number of interlinked magnetic fluxes $\phi$ changes due to the temperature of the magnet of the rotor in addition to the variation in the manufacture of the AC rotating machine. Therefore, a difference occurs between the numerical value of the number of interlinked magnetic fluxes $\phi$ acquired by a control device and the actual numerical value thereof. Due to this difference, if non-interference compensation is not properly performed, the accuracy of the control may deteriorate and the overcurrent may be caused.

The present disclosure has been made in view of the above circumstances, and an objective thereof is to provide a control device for an AC rotating machine, and an electric power-steering device capable of suppressing the occurrence of an overcurrent due to a change in an induced voltage.

[MEANS TO SOLVE THE PROBLEM]

The present invention is defined in the appended independent claim.

Exemplary embodiments of the invention are given in the dependent claims.

Moreover, an electric power-steering device according to an aspect of the present disclosure includes: the control device according to the above aspect; the AC rotating machine; and a driving force transmission mechanism configured to transmit a driving force of the AC rotating machine to a steering system of a vehicle .

[EFFECTS OF THE INVENTION]

According to the present disclosure, a control device for an AC rotating machine, and an electric power-steering device capable of suppressing the occurrence of an overcurrent due to a change in an induced voltage can be provided.

[Brief Description of Drawings]

FIG. 1 is a block diagram showing a schematic configuration of a control device of a rotating machine according to Embodiment 1.
FIG. 2 is a diagram for showing a switching signal generation principle in Embodiment 1.
FIG. 3 is a block diagram showing a configuration of a d-axis voltage command value calculator of FIG. 1.
FIG. 4 is a block diagram showing a configuration of a q-axis voltage command value calculator of FIG. 1.
FIG. 5 is a flowchart showing an example of a process performed by a corrected voltage generator of FIG. 1.
FIG. 6 is a diagram showing an example of waveforms of a voltage command value and a corrected voltage command value in Embodiment 1.
FIG. 7 is a Bode plot diagram showing transmission characteristics from a q-axis electric current command value to a detected q-axis electric current value when a rotational angular velocity is high in the control device according to Embodiment 1.
FIG. 8 is a block diagram showing a configuration of a d-axis voltage command value calculator according to Embodiment 2.
FIG. 9 is a block diagram showing a configuration of a q-axis voltage command value calculator according to Embodiment 2.
FIG. 10 is a block diagram showing a schematic configuration of a control device for a rotating machine according to Embodiment 3.
FIG. 11 is a block diagram showing a configuration of a d-axis voltage command value calculator according to Embodiment 3.
FIG. 12 is a block diagram showing a configuration of a q-axis voltage command value calculator according to Embodiment 3.
FIG. 13 is a diagram showing a relationship between a proportional gain, a limit gain, and a voltage amplitude in Embodiment 3.
FIG. 14 is a graph showing an example of a waveform of a voltage between both ends of a shunt resistor in Embodiment 3.
FIG. 15 is a diagram showing a case where a partial corrected voltage command value is greater than an upper limit value in Embodiment 3.
FIG. 16 is a block diagram showing a schematic configuration of an electric power-steering device according to Embodiment 4.
FIG. 17 is a graph showing a relationship between steering torque, a q-axis electric current command value, and a vehicle speed in Embodiment 4.
FIG. 18 is a diagram showing a relationship between the vehicle speed and a proportional gain in Embodiment 4.
FIG. 19 is a block diagram showing a schematic configuration of an electric power-steering device according to Embodiment 5.
FIG. 20 is a graph showing a relationship between an amount of change in steering torque and a limit gain in Embodiment 5.

[Description of Embodiments]

Hereinafter, a control device for a rotating machine and an electric power-steering device according to the present disclosure will be described in detail with reference to the drawings.

Embodiment 1

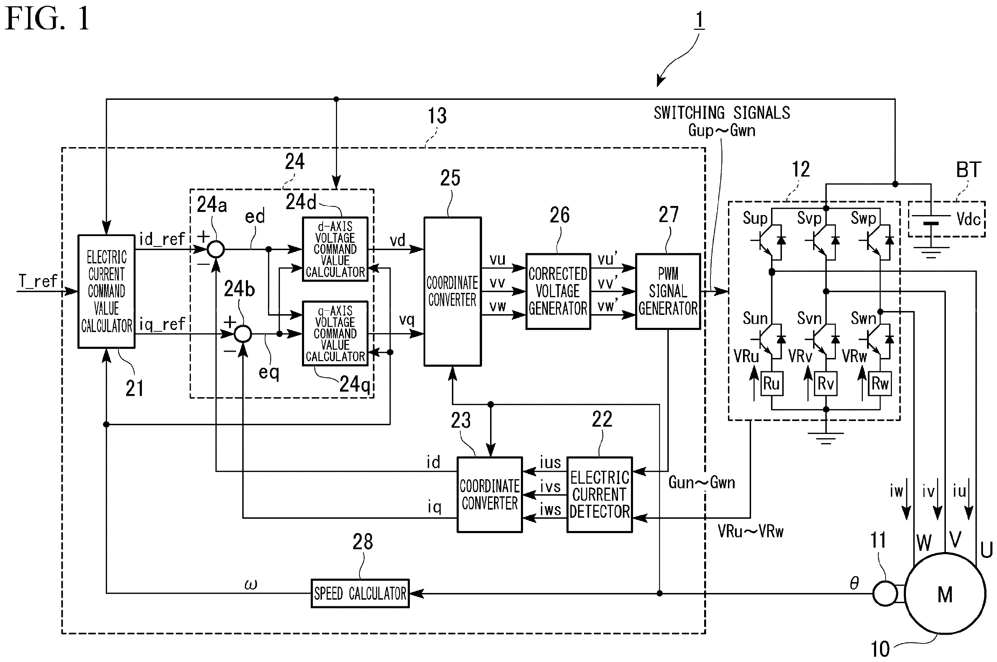

FIG. 1 is a block diagram showing a schematic configuration of a control device for a rotating machine according to Embodiment 1. As shown in FIG. 1, a control device 1 includes a rotor position detector 11, an inverter 12, and a controller 13. The control device 1 controls a rotating machine 10 based on a torque command T_ref serving as a control command input from the outside of the control device 1.

The rotating machine 10 is a three-phase AC rotating machine having three-phase windings U, V, and W. Moreover, the rotating machine 10 is an AC rotating machine that can be controlled based on two rotational axes. In the present specification, the "two rotational axes" refer to two axes that rotate synchronously with the rotor of the rotating machine 10 and that are orthogonal to each other in a lateral cross-section. The "lateral cross-section" is a cross-section perpendicular to the central axis of the rotor. For example, the two rotational axes may be d- and q-axes. The d-axis is an axis that connects the central axis of the rotor and a magnetic pole. The q-axis is an axis orthogonal to both the d-axis and the central axis. Moreover, the two rotational axes may be $\gamma$- and $\delta$-axes. The $\gamma$-axis is an axis that is shifted in a rotational direction with respect to the d-axis. The $\delta$-axis is an axis orthogonal to both the $\gamma$-axis and the central axis. Either one of the two rotational axes is referred to as a first axis, and the other is referred to as a second axis. For example, when the d-axis is referred to as the first axis, the q-axis is referred to as the second axis. The q-axis may be the first axis, and the d-axis may be the second axis. Likewise, when the $\gamma$-axis is referred to as the first axis, the $\delta$-axis may be referred to as the second axis.

Hereinafter, a case where the rotating machine 10 is a permanent magnet synchronous rotating machine and the two rotational axes are the d- and q-axes will be described. However, the rotating machine 10 may be, for example, a winding field synchronous rotating machine, an induction rotating machine, a synchronous reluctance motor, or the like. Moreover, the d-axis and the q-axis in the following disclosure content may be replaced with the $\delta$-axis and the $\gamma$-axis.

The rotor position detector 11 includes a resolver, an encoder, a magnetoresistive (MR) sensor, and the like, and uses these to detect a rotor position $\theta$. The rotor position $\theta$ is a position of the rotor provided in the rotating machine 10 in the rotational direction. In the present embodiment, the rotor position $\theta$ of the rotating machine 10 is detected by using the rotor position detector 11. However, a configuration for estimating the rotor position $\theta$ of the rotating machine 10 without using the rotor position detector 11 can also be adopted. That is, in the present disclosure, the control device 1 may not include the rotor position detector 11.

The inverter 12 is a power converter that applies a voltage to the rotating machine 10. Specifically, under the control of the controller 13, the inverter 12 converts direct current (DC) power supplied from a DC power supply BT into AC power and supplies the AC power obtained in the conversion process to the rotating machine 10. The DC power supply BT includes, in addition to a battery, equipment for supplying DC power, such as a DC-DC converter, a diode rectifier, and a PWM rectifier. In the present specification, the output voltage (DC bus voltage) of the DC power supply BT is denoted by Vdc.

The inverter 12 includes upper arm-switching elements Sup, Svp, and Swp, lower arm-switching elements Sun, Svn, and Swn, and shunt resistors Ru, Rv, and Rw. The upper arm-switching elements Sup, Svp, and Swp are connected to the positive electrode of the DC power supply BT. The lower arm-switching elements Sun, Svn, and Swn are connected to the upper arm-switching elements Sup, Svp, and Swp, respectively, and are connected to the negative electrode of the DC power supply BT via the shunt resistors Ru, Rv, and Rw, respectively.

Here, a U-phase series circuit is formed of the upper arm-switching element Sup, the lower arm-switching element Sun, and the shunt resistor Ru. In this U-phase series circuit, the connection point between the upper arm-switching element Sup and the lower arm-switching element Sun is connected to the winding U of the rotating machine 10.

Moreover, a V-phase series circuit is formed of the upper arm-switching element Svp, the lower arm-switching element Svn, and the shunt resistor Rv. In this V-phase series circuit, the connection point between the upper arm-switching element Svp and the lower arm-switching element Svn is connected to the winding V of the rotating machine 10.

Moreover, a W-phase series circuit is formed of the upper arm-switching element Swp, the lower arm-switching element Swn, and the shunt resistor Rw. In this W-phase series circuit, the connection point between the upper arm-switching element Swp and the lower arm-switching element Swn is connected to the winding W of the rotating machine 10.

For the upper arm-switching elements Sup, Svp, and Swp and the lower arm-switching elements Sun, Svn, and Swn, semiconductor switches such as an insulated gate bipolar transistor (IGBT), a bipolar transistor, and a metal-oxide-semiconductor field effect transistor (MOSFET) can be used.

Switching signals Gup, Gvp, and Gwp output from the controller 13 are input to the upper arm-switching elements Sup, Svp, and Swp, respectively. Switching signals Gun, Gvn, and Gwn output from the controller 13 are input to the lower arm-switching elements Sun, Svn, and Swn, respectively. The upper arm-switching elements Sup, Svp, and Swp and the lower arm-switching elements Sun, Svn, and Swn are turned on or off by the switching signals Gup, Gvp, Gwp, Gun, Gvn, and Gwn output from the controller 13. In the present specification and drawings, the switching signals Gup, Gvp, Gwp, Gun, Gvn, and Gwn may be collectively referred to as "switching signals Gup to Gwn."

For example, the upper arm-switching element Sup is in an ON state when the switching signal Gup is "ON command (= 1)," and the upper arm-switching element Sup is in an OFF state when the switching signal Gup is "OFF command (= 0)." The same is true for other switching elements (the upper arm-switching elements Svp and Swp and the lower arm-switching elements Sun, Svn, and Swn). In this way, the inverter 12 generates, from the DC power supplied by the DC power supply BT, AC power to be supplied to the rotating machine 10.

The shunt resistors Ru, Rv, and Rw are resistance elements for electric current detection.

The shunt resistor Ru outputs, to the controller 13, a voltage VRu (= $-Ru \times iu$) between both ends thereof proportional to an electric current (rotating machine electric current) iu flowing through the winding U of the rotating machine 10. The shunt resistor Rv outputs, to the controller 13, a voltage VRv (= -Rv×iv) between both ends thereof proportional to an electric current (rotating machine electric current) iv flowing through the winding V of the rotating machine 10. The shunt resistor Rw outputs, to the controller 13, a voltage VRw (= -Rw×iw) between both ends thereof proportional to an electric current (rotating machine electric current) iw flowing through the winding W of the rotating machine 10. In the present specification and drawings, the voltages VRu, VRv, and VRw between both ends may be collectively referred to as "both-end voltages VRu to VRw."

Here, the both-end voltages VRu, VRv, and VRw are values obtained by multiplying the rotating machine electric currents iu, iv, and iw by the resistance values of the shunt resistors Ru, Rv, and Rw, and are quantities proportional to the electric currents iu, iv, and iw. For this reason, it can be said that the both-end voltages VRu, VRv, and VRw are values obtained by detecting electric currents (detected values of the rotating machine electric currents).

Furthermore, the inverter 12 may be integrated into the rotating machine 10. The integrated inverter 12 and the rotating machine 10 are referred to as a power pack.

The controller 13 uses, as input values, the torque command T_ref, the both-end voltages VRu, VRv, and VRw, and the rotor position θ and generates the switching signals Gup to Gwn for driving the inverter 12 based thereon. The controller 13 is a PWM controller implemented by a discrete-time calculator such as a microcomputer or a digital signal processor (DSP). The controller 13 includes an electric current command value calculator 21, an electric current detector 22, a coordinate converter 23 (detection coordinate converter), a voltage command value calculation unit 24, a coordinate converter 25 (control coordinate converter), a corrected voltage generator 26, a PWM signal generator 27, and a speed calculator 28.

The speed calculator 28 obtains a rotational angular velocity ω of the rotating machine 10 by performing differential calculation or difference calculation on the rotor position θ. The speed calculator 28 inputs the obtained rotational angular velocity ω to a d-axis voltage command value calculator 24d and a q-axis voltage command value calculator 24q of the voltage command value calculation unit 24 in addition to the electric current command value calculator 21.

The electric current command value calculator 21 calculates electric current command values id_ref and iq_ref based on the torque command T_ref, the DC bus voltage Vdc, and the rotational angular velocity ω. The electric current command values id_ref and iq_ref are command values (target values) of the electric current to flow through the rotating machine 10. id_ref also denotes a "weak field current command value," and iq_ref also denotes a "torque current command value." As the calculation method executed by the electric current command value calculator 21, maximum torque per ampere (MTPA) control, maximum torque per voltage (MTPV) control, and weak magnetic flux control which are well known may be used in an appropriate combination for each operation range (a range of speed-torque characteristics). Also, the rotational angular velocity ω may be converted into the rotational speed of the rotor, and each control process may be performed using the rotational speed.

Next, the PWM signal generator 27 will be described. The PWM signal generator 27 outputs pulse width modulation (PWM) modulated switching signals Gup to Gwn based on corrected voltage command values vu', vv', and vw' output from the corrected voltage generator 26. The corrected voltage command values vu', vv', and vw' will be described below.

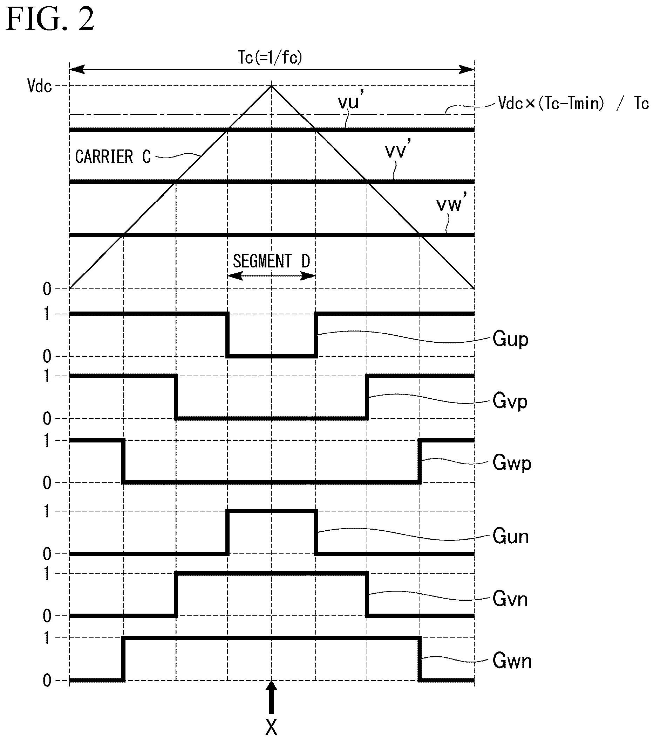

FIG. 2 is a diagram for showing a switching signal generation principle in Embodiment 1. The PWM signal generator 27 generates the switching signals Gup to Gwn by comparing the corrected voltage command values vu', vv', and vw' with a carrier triangle wave (carrier) C having a period Tc (frequency fc). The corrected voltage command values vu', vv', and vw' correspond to the U-phase, the V-phase, and the W-phase, respectively.

Specifically, the PWM signal generator 27 turns on the switching signal Gup ("1") and turns off the switching signal Gun ("0") if the corrected voltage command value vu' is greater than the carrier triangle wave C. In contrast, the PWM signal generator 27 turns off the switching signal Gup ("0") and turns on the switching signal Gun ("1") if the corrected voltage command value vu' is less than the carrier triangle wave C.

Moreover, the PWM signal generator 27 turns on the switching signal Gvp ("1") and turns off the switching signal Gvn ("0") if the corrected voltage command value vv' is greater than the carrier triangle wave C. In contrast, the PWM signal generator 27 turns off the switching signal Gvp ("0") and turns on the switching signal Gvn ("1") if the corrected voltage command value vv' is less than the carrier triangle wave C.

Moreover, the PWM signal generator 27 turns on the switching signal Gwp ("1") and turns off the switching signal Gwn ("0") if the corrected voltage command value vw' is greater than the carrier triangle wave C. In contrast, the PWM signal generator 27 turns off the switching signal Gwp ("0") and turns on the switching signal Gwn ("1") if the corrected voltage command value vw' is less than the carrier triangle wave C.

Further, a short circuit prevention time (dead time) may be provided in the switching signals Gup to Gwn such that the upper arm-switching elements Sup, Svp, and Swp and the lower arm-switching elements Sun, Svn, and Swn of the inverter 12 are not turned on at the same time.

The switching signals Gup to Gwn include a pattern in which all of the lower arm-switching elements Sun, Svn, and Swn are turned on during one period of the electric angle of the rotating machine 10. Specifically, a segment D shown in FIG. 2 has a pattern in which all of the switching signals Gun, Gvn, and Gwn are turned on (1).

Here, the PWM modulated voltage applied from the inverter 12 to the rotating machine 10 includes components of integer multiples of the period Tc of the carrier triangle wave C in addition to components of the corrected voltage command values vu', vv', and vw'. As a result, an electric current of a component of an integer multiple of the period Tc is caused to pass through the rotating machine 10, and the rotating machine 10 may make abnormal noise according to a value of the period Tc.

In order to prevent the occurrence of such abnormal noise, for example, when the rotating machine 10 is used as a motor that performs the steering assist of electric power steering, it is only necessary to set the period Tc of the carrier triangle wave C to 60 [μs] or less. By setting Tc = 60 [μs], an abnormal noise frequency fc (= 1/Tc) becomes 16.6 kHz, and it is less likely to become noise that humans find unpleasant. More preferably, it is only necessary to set the period Tc of the carrier triangle wave C to about 50 [μs]. By setting Tc = 50 [μs], the abnormal noise frequency fc (= 1/Tc) becomes about 20 kHz, which is substantially inaudible to humans. A frequency range audible to humans is approximately 20 Hz to 20 kHz. Hereinafter, the case of Tc = 50 [μs] will be described.

Next, the electric current detector 22 shown in FIG. 1 will be described. The electric current detector 22 outputs pre-conversion detected electric currents ius, ivs, and iws using the voltages VRu, VRv, and VRw between both ends of the shunt resistors Ru, Rv, and Rw and the switching signals Gup to Gwn output from the PWM signal generator 27. Specifically, the electric current detector 22 acquires the voltages VRu, VRv, and VRw between both ends of the shunt resistors Ru, Rv, and Rw at a timing "X" shown in FIG. 2. The timing "X" is a timing at which the carrier triangle wave C has a maximum value (the DC bus voltage Vdc).

At the timing "X," as shown in FIG. 2, the switching signals Gun, Gvn, and Gwn input to the lower arm-switching elements Sun, Svn, and Swn are all ON ("1"). Thus, the electric current detector 22 acquires values of the pre-conversion detected electric currents ius, ivs, and iws by dividing the voltages VRu, VRv, and VRw between both ends of the shunt resistors Ru, Rv, and Rw by -Ru, -Rv, and -Rw, respectively.

The coordinate converter 23 performs coordinate conversion based on the pre-conversion detected electric currents ius, ivs, and iws detected by the electric current detector 22 and the rotor position θ detected by the rotor position detector 11. Thereby, the coordinate converter 23 calculates detected electric current values id and iq on the two rotational axes (the d- and q-axes). Moreover, the coordinate converter 23 inputs calculation results (detected electric current values id and iq after coordinate conversion) to the voltage command value calculation unit 24.

The voltage command value calculation unit 24 calculates voltage command values vd and vq on the two rotational axes (the d- and q-axes) based on the electric current command values id_ref and iq_ref calculated by the electric current command value calculator 21, the detected electric current values id and iq, the rotational angular velocity ω, and the DC bus voltage Vdc.

Hereinafter, the voltage command value calculation unit 24 will be described in detail.

The voltage command value calculation unit 24 includes a first deviation calculator 24a, a second deviation calculator 24b, the d-axis voltage command value calculator 24d, and the q-axis voltage command value calculator 24q.

The first deviation calculator 24a calculates a d-axis electric current deviation ed that is a deviation between a d-axis electric current command value id_ref and a detected d-axis electric current value id. The second deviation calculator 24b calculates a q-axis electric current deviation eq that is a deviation between a q-axis electric current command value iq_ref and a detected q-axis electric current value iq. The value of the d-axis electric current deviation ed calculated by the first deviation calculator 24a is input to the d-axis voltage command value calculator 24d and the q-axis voltage command value calculator 24q. The value of the q-axis electric current deviation eq calculated by the second deviation calculator 24b is input to the d-axis voltage command value calculator 24d and the q-axis voltage command value calculator 24q.

The d-axis voltage command value calculator 24d calculates a d-axis voltage command value vd using the d-axis electric current deviation ed, the q-axis electric current deviation eq, the DC bus voltage Vdc, and the rotational angular velocity ω. The q-axis voltage command value calculator 24q calculates a q-axis voltage command value vq using the q-axis electric current deviation eq, the d-axis electric current deviation ed, the DC bus voltage Vdc, and the rotational angular velocity ω.

In the present specification, the deviation between the electric current command value and the detected electric current value on the first axis of the two rotational axes may be referred to as a first deviation. Likewise, the deviation between the electric current command value and the detected electric current value on the second axis of the two rotational axes may be referred to as a second deviation. For example, when the d-axis is the first axis, the d-axis electric current deviation ed, which is the deviation between the electric current command value id_ref on the d-axis and the detected d-axis electric current value id, is the "first deviation," and the q-axis electric current deviation eq is the "second deviation." Likewise, when the q-axis is the first axis, the q-axis electric current deviation eq is the "first deviation," and the d-axis electric current deviation ed is the "second deviation."

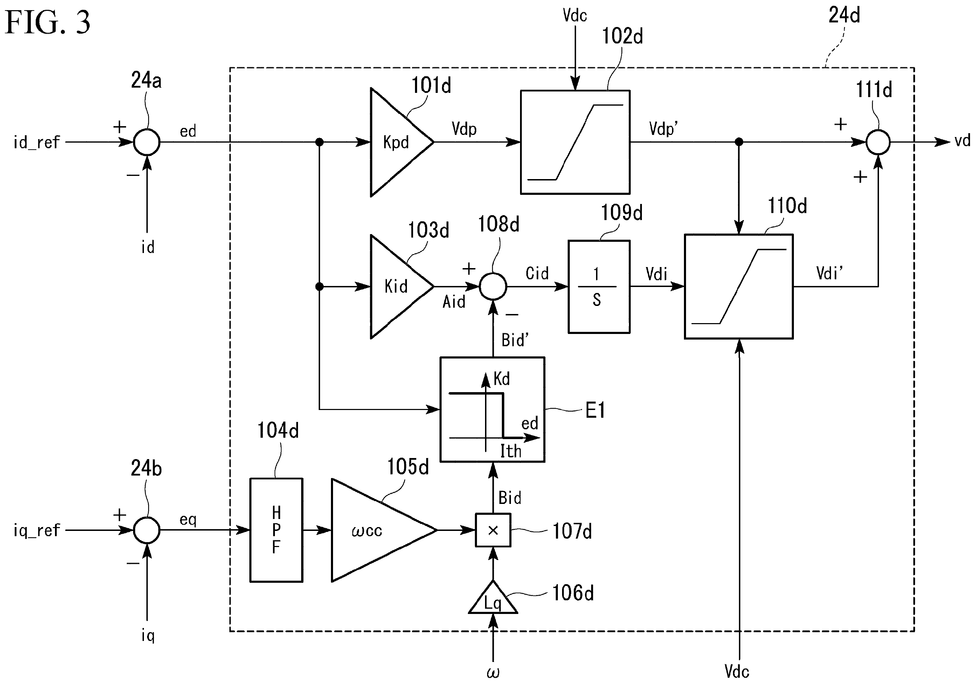

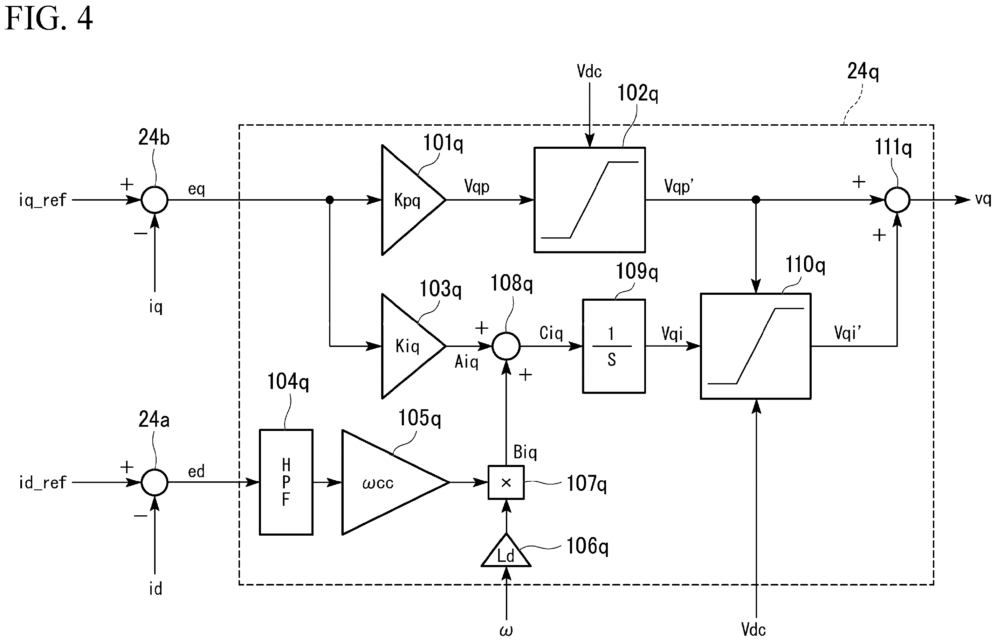

Details of the d-axis voltage command value calculator 24d are shown in FIG. 3, and details of the q-axis voltage command value calculator 24q are shown in FIG. 4. Hereinafter, the d-axis voltage command value calculator 24d will be described with reference to FIG. 3. The d-axis voltage command value calculator 24d includes a d-axis proportional amplifier 101d, a limiter 102d, a d-axis integral amplifier 103d, a high-pass filter (HPF) 104d, a response angular frequency amplifier 105d, an inductance amplifier 106d, a multiplier 107d, a subtractor 108d, an integrator 109d, a limiter 110d, an adder 111d, and a gain changer E1.

The d-axis proportional amplifier 101d calculates a d-axis proportional output Vdp by multiplying the d-axis electric current deviation ed by Kpd. That is, Vdp = ed×Kpd. "Kpd" denotes a d-axis proportional gain that is multiplied in order that the rotating machine electric current actually flowing with respect to the electric current command value id_ref becomes a preferred response. For example, Kpd = ωcc×Ld. Here, ωcc denotes a response angular frequency (more specifically, a reciprocal of a time constant of a feedback control system) for adjusting the frequency response of the rotating machine electric current with respect to the electric current command value to be in a preferred range, and Ld denotes a d-axis inductance of the rotating machine 10. However, the value of Kpd is not limited to ωcc×Ld, and may be appropriately adjusted by actually measuring the responsiveness of the rotating machine electric current actually flowing with respect to the electric current command value id_ref, or the like. The d-axis proportional output Vdp calculated by the d-axis proportional amplifier 101d is input to the limiter 102d.

The limiter 102d compares the d-axis proportional output Vdp with an upper limit value (Vlimit) and a lower limit value (-Vlimit) and outputs a limited d-axis proportional output Vdp' based on a comparison result. However, Vlimit = Kmax•Vdc/2^0.5. Kmax denotes a maximum voltage utilization rate of the inverter 12 and is set appropriately in accordance with a desired output. For example, Kmax may be 1.

Specific calculations performed by the limiter 102d are as follows.

(A) In the case of Vdp < -Vlimit, Vdp' = -Vlimit
(B) In the case of -Vlimit ≤ Vdp ≤ Vlimit, Vdp' = Vdp
(C) In the case of Vlimit < Vdp, Vdp' = Vlimit

That is, when the d-axis proportional output Vdp exceeds the upper limit value (Vlimit) or falls below the lower limit value (-Vlimit), the limiter 102d limits the value of Vdp and outputs the limited value as the limited d-axis proportional output Vdp'. Moreover, when the d-axis proportional output Vdp is greater than or equal to the lower limit value and less than or equal to the upper limit value, the limiter 102d outputs the value of Vdp as the limited d-axis proportional output Vdp' as it is. The value of the limited d-axis proportional output Vdp' output by the limiter 102d is input to the limiter 110d and the adder 111d.

The d-axis integral amplifier 103d calculates an own-axis integral input Aid by multiplying the d-axis electric current deviation ed by Kid. That is, Aid = ed×Kid. "Kid" denotes an integral gain which is multiplied in order to set the steady value of the d-axis electric current deviation ed to 0. For example, Kid = ωcc×R. Here, R denotes a winding resistance value of the rotating machine 10. However, the value of Kid is not limited to ωcc×R, and may be appropriately adjusted based on the actual measurement result or the like. The own-axis integral input Aid calculated by the d-axis integral amplifier 103d is input to the subtractor 108d.

The high-pass filter 104d reduces a low-frequency component of the q-axis electric current deviation eq and outputs it to the response angular frequency amplifier 105d.

The response angular frequency amplifier 105d multiplies, by ωcc, the q-axis electric current deviation eq whose low-frequency component is reduced by the high-pass filter 104d and outputs a multiplication result to the multiplier 107d.

The inductance amplifier 106d multiplies the rotational angular velocity ω by Lq and outputs a multiplication result to the multiplier 107d. "Lq" denotes the value of the q-axis inductance of the rotating machine 10.

The multiplier 107d obtains an other-axis integral input Bid by multiplying the output of the response angular frequency amplifier 105d by the output of the inductance amplifier 106d. The multiplier 107d outputs the other-axis integral input Bid to the gain changer E1.

The gain changer E1 multiplies the other-axis integral input Bid by a gain Kd and outputs a multiplication result as a corrected other-axis integral input Bid'. That is, Bid' = Kd×Bid.

The numerical value of the gain Kd changes based on the value of the d-axis electric current deviation ed. Specifically, the gain Kd is obtained as shown in the following equations (1-1) and (1-2).

(1-1) In the case of ed > Ith, Kd = 0
(1-2) In the case of ed ≤ Ith, Kd = 1

Here, Ith denotes a deviation threshold value, which is a real number greater than or equal to 0. There is a correlation between an oscillation amplitude of the q-axis electric current command value iq_ref and the deviation threshold value Ith. Therefore, the specific numerical value of the deviation threshold value Ith may be set to, for example, a value of 1/5 or less of the vibration amplitude of iq_ref. Alternatively, when a change in the q-axis electric current command value iq_ref is not in an oscillating wave shape but is in a step shape, the deviation threshold value Ith may be set to 0.

In addition, if chattering in the numerical value of the d-axis electric current deviation ed occurs in the vicinity of the deviation threshold value Ith and the gain Kd alternates between 0 and 1 in a short period of time, noise may occur in the AC rotating machine 10. In this case, the change in the numerical value of the gain Kd in the vicinity of the deviation threshold value Ith may be smoothed. Alternatively, when the corrected other-axis integral input Bid' is calculated, a value of the gain Kd having passed through a low-pass filter may be used.

The subtractor 108d obtains a d-axis integral input Cid by subtracting the corrected other-axis integral input Bid' from the own-axis integral input Aid. The subtractor 108d outputs the d-axis integral input Cid to the integrator 109d.

The integrator 109d performs integral calculation on the d-axis integral input Cid and outputs an integral calculation result as a d-axis integration output Vdi to the limiter 110d.

The limiter 110d compares the d-axis integral output Vdi with the upper limit value (Vlimit-Vdp') and the lower limit value (-Vlimit-Vdp') and outputs a limited d-axis integral output Vdi' based on a comparison result. Specific calculations performed by the limiter 110d are as follows.

(D) In the case of Vdi < -Vlimit-Vdp', Vdi' = -Vlimit-Vdp'
(E) In the case of -Vlimit-Vdp' $\leq$ Vdi $\leq$ Vlimit-Vdp', Vdi' = Vdi
(F) In the case of Vlimit-Vdp' < Vdi, Vdi' = Vlimit-Vdp'

That is, when the d-axis integral output Vdi exceeds the upper limit value (Vlimit-Vdp') or falls below the lower limit value (-Vlimit-Vdp'), the limiter 110d limits the value of Vdi and outputs the limited value as the limited d-axis integral output Vdi'. Moreover, when the d-axis integral output Vdi is greater than or equal to the lower limit value and less than or equal to the upper limit value, the limiter 110d outputs the value of Vdi as the limited d-axis integral output Vdi' as it is. The value of the limited d-axis integral output Vdi' output by the limiter 110d is input to the adder 111d.

Here, the reason why the limiter 110d makes limit determination using the limited d-axis proportional output Vdp' is to prevent excessive accumulation of the limited d-axis integral output Vdi' and to obtain the effect of anti-wind-up.

The adder 111d adds the limited d-axis proportional output Vdp' to the limited d-axis integral output Vdi' to obtain the d-axis voltage command value vd. The obtained voltage command value vd is input to the coordinate converter 25 as shown in FIG. 1.

Next, the q-axis voltage command value calculator 24q will be described with reference to FIG. 4. The q-axis voltage command value calculator 24q includes a q-axis proportional amplifier 101q, a limiter 102q, a q-axis integral amplifier 103q, a high-pass filter (HPF) 104q, a response angular frequency amplifier 105q, an inductance amplifier 106q, a multiplier 107q, an adder 108q, an integrator 109q, a limiter 110q, and an adder 111q.

The q-axis proportional amplifier 101q calculates a q-axis proportional output Vqp by multiplying the q-axis electric current deviation eq by Kpq. That is, Vqp = eq×Kpq. "Kpq" denotes a q-axis proportional gain that is multiplied in order that the rotating machine electric current actually flowing with respect to the electric current command value iq_ref becomes a preferred response. For example, Kpq = ωcc×Lq. Here, as described above, ωcc denotes the response angular frequency, and Lq denotes the q-axis inductance. However, the value of Kpq is not limited to ωcc×Lq and may be appropriately adjusted by actually measuring the responsiveness of the rotating machine electric current actually flowing with respect to the electric current command value iq_ref, or the like. The q-axis proportional output Vqp calculated by the q-axis proportional amplifier 101q is input to the limiter 102q.

The limiter 102q compares the q-axis proportional output Vqp with the upper limit value (Vlimit) and the lower limit value (-Vlimit) and outputs a limited q-axis proportional output Vqp' based on a comparison result.

Specific calculations performed by the limiter 102q are as follows.

(G) In the case of Vqp < -Vlimit, Vqp' = -Vlimit
(H) In the case of -Vlimit $\leq$ Vqp $\leq$ Vlimit, Vqp' = Vqp
(I) In the case of Vlimit < Vqp, Vqp' = Vlimit

That is, when the q-axis proportional output Vqp exceeds the upper limit value (Vlimit) or falls below the lower limit value (-Vlimit), the limiter 102q limits the value of Vqp and outputs the limited value as the limited q-axis proportional output Vqp'. Moreover, when the q-axis proportional output Vqp is greater than or equal to the lower limit value and less than or equal to the upper limit value, the limiter 102q outputs the value of Vqp as the limited q-axis proportional output Vqp' as it is. The value of the limited q-axis proportional output Vqp' output by the limiter 102q is input to the limiter 110q and the adder 111q.

The q-axis integral amplifier 103q calculates an own-axis integral input Aiq by multiplying the q-axis electric current deviation eq by Kiq. That is, Aiq = eq×Kiq. Here, Kiq denotes an integral gain that is multiplied in order to set the steady value of the q-axis electric current deviation eq to 0. For example, Kiq = ωcc×R. However, the value of Kiq is not limited to ωcc×R and may be adjusted appropriately based on actual measurement results or the like. The own-axis integral input Aiq calculated by the q-axis integral amplifier 103q is input to the an adder 108q.

The high-pass filter 104q reduces a low-frequency component of the d-axis electric current deviation ed and outputs it to the response angular frequency amplifier 105q.

The response angular frequency amplifier 105q multiplies, by ωcc, the d-axis electric current deviation ed whose low-frequency component is reduced by the high-pass filter 104q and outputs a multiplication result to the multiplier 107q.

The inductance amplifier 106q multiplies the rotational angular velocity ω by Ld and outputs a multiplication result to the multiplier 107q.

The multiplier 107q obtains an other-axis integral input Biq by multiplying an output of the response angular frequency amplifier 105q by an output of the inductance amplifier 106q. The multiplier 107q outputs the other-axis integral input Biq to the adder 108q.

The adder 108q calculates a q-axis integral input Ciq by adding the own-axis integral input Aiq to the other-axis integral input Biq. The adder 108q outputs the q-axis integral input Ciq to the integrator 109q.

The integrator 109q performs integral calculation on the q-axis integral input Ciq and outputs an integral calculation result as a q-axis integration output Vqi to the limiter 110q.

The limiter 110q compares the q-axis integral output Vqi with the upper limit value (Vlimit-Vqp') and the lower limit value (-Vlimit-Vqp') and outputs a limited q-axis integral output Vqi' based on a comparison result. Specific calculations performed by the limiter 110q are as follows.

(J) In the case of Vqi < -Vlimit-Vqp', Vqi' = -Vlimit-Vqp'
(K) In the case of -Vlimit-Vqp' $\leq$ Vdi $\leq$ Vlimit-Vqp', Vqi' = Vqi
(L) In the case of Vlimit-Vqp' < Vqi, Vqi' = Vlimit-Vqp'

That is, when the q-axis integral output Vqi exceeds the upper limit value (Vlimit-Vqp') or falls below the lower limit value (-Vlimit-Vqp'), the limiter 110q limits the value of Vqi and outputs the limited value as the limited q-axis integral output Vqi'. Moreover, when the q-axis integral output Vqi is greater than or equal to the lower limit value and less than or equal to the upper limit value, the limiter 110q outputs the value of Vqi as the limited q-axis integral output Vqi' as it is. The value of the limited q-axis integral output Vqi' output by the limiter 110q is input to the adder 111q.

Here, the reason why the limiter 110q makes limit determination using the limited q-axis proportional output Vqp' is to prevent excessive accumulation of the limited q-axis integral output Vqi' and to obtain the effect of anti-wind-up.

The adder 111q obtains the q-axis voltage command value vq by adding the limited q-axis proportional output Vqp' to the limited q-axis integral output Vqi'. The obtained voltage command value vq is input to the coordinate converter 25.

As shown in FIG. 1, the voltage command values vd and vq on the two rotational axes (d- and q-axes) and the rotor position θ are input to the coordinate converter 25. The coordinate converter 25 performs coordinate conversion for the voltage command values vd and vq based on the rotor position θ and calculates the voltage command values vu, vv, and vw on the three-phase coordinates.

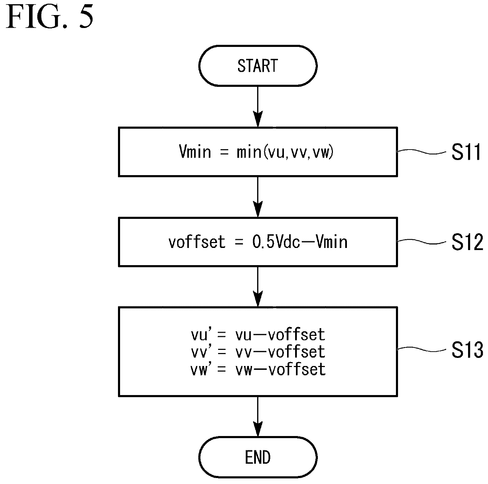

The corrected voltage generator 26 generates the corrected voltage command values vu', vv', and vw' based on the voltage command values vu, vv, and vw output from the coordinate converter 25 and an offset voltage voffset. FIG. 5 is a flowchart showing a process performed by the corrected voltage generator 26 in Embodiment 1.

When the process of the flowchart shown in FIG. 5 is started, step S11 is first executed. In step S11, the corrected voltage generator 26 selects a smallest value from the voltage command values vu, vv, and vw and sets the selected value as Vmin.

Subsequently, in step S12, the corrected voltage generator 26 sets the value of the offset voltage voffset to 0.5 Vdc-Vmin.

Subsequently, in step S13, the corrected voltage generator 26 obtains the corrected voltage command values vu', vv', and vw' by subtracting the offset voltage voffset from the voltage command values vu, vv, and vw, respectively.

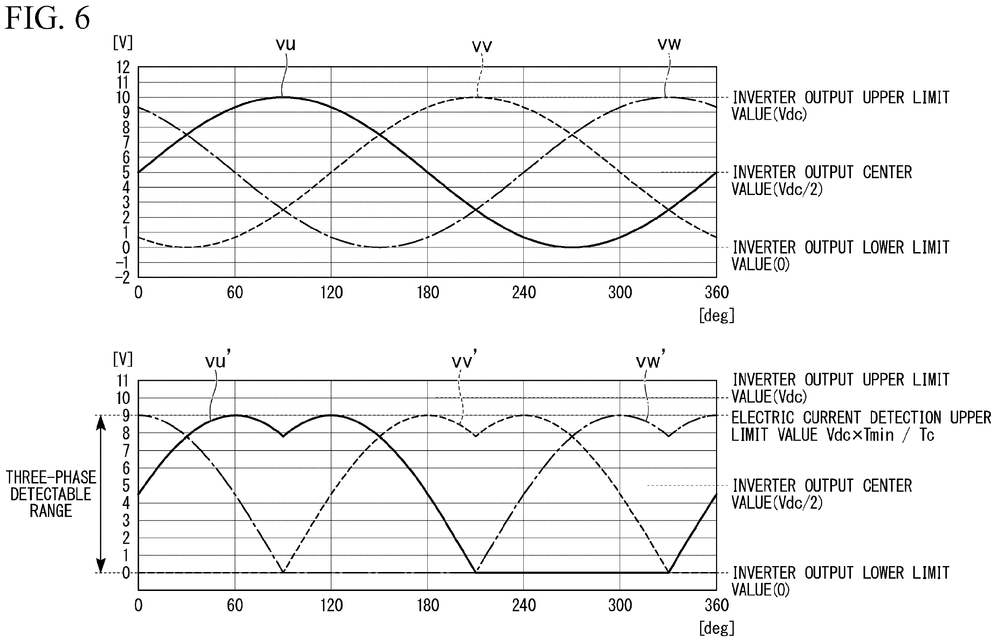

FIG. 6 is a diagram showing an example of waveforms of the voltage command values vu, vv, and vw and the corrected voltage command values vu', vv', and vw' in Embodiment 1. Furthermore, in FIG. 6, the waveform graph of the voltage command values vu, vv, and vw is shown on the upper side, and the waveform graph of the corrected voltage command values vu', vv', and vw' is shown on the lower side. In each graph shown in FIG. 6, the DC bus voltage Vdc = 10 V. Here, the range of a voltage capable of being output by the inverter 12 is 0 (a minimum value of the carrier triangle wave C) to Vdc (a maximum value of the carrier triangle wave C). For this reason, when the DC bus voltage Vdc = 10 V, the range of a voltage capable of being output by the inverter 12 is 0 V to 10 V as shown in FIG. 6.

When a process of steps S11 to S13 shown in FIG. 5 is performed, the minimum values of the corrected voltage command values vu', vv', and vw' always matches the lower limit value of the output of the inverter as shown in the lower graph of FIG. 6. This means that the corrected voltage command values vu', vv', and vw' are offset to the lower side as equally as possible in three phases within a range in which the voltage is not saturated and the ON-time of the lower arm-switching elements Sun, Svn, and Swn increases as much as possible. This point is advantageous from the viewpoint of electric current detection in an inverter including the shunt resistors Ru, Rv, and Rw in series with respect to the lower arm-switching elements Sun, Svn, and Swn, as in the present embodiment.

Furthermore, a method of calculating the offset voltage voffset is not limited to the above-described method. For example, in step S11 of FIG. 5, in addition to a process of selecting a smallest value from the voltage command values vu, vv, and vw and setting the selected value to Vmin, a process in which a largest value is selected from the voltage command values vu, vv, and vw and is set to Vmax may be performed. Also, in step S12, a process of setting voffset to "(Vmax+Vmin)/2" may be performed. Thus, a method of making voffset = (Vmax+Vmin)/2 is referred to as third-harmonic addition or HIP modulation. Moreover, the upper arm-switching element corresponding to the phase having the highest voltage command value among the three phases may always be in an ON state, and so-called two-phase modulation may be adopted.

The corrected voltage command values vu', vv', and vw' generated by the corrected voltage generator 26 according to the above calculation are input to the PWM signal generator 27. Then, the PWM signal generator 27 performs PWM modulation for the corrected voltage command values vu', vv', and vw' and outputs PWM modulation results as the switching signals Gup to Gwn to the inverter 12.

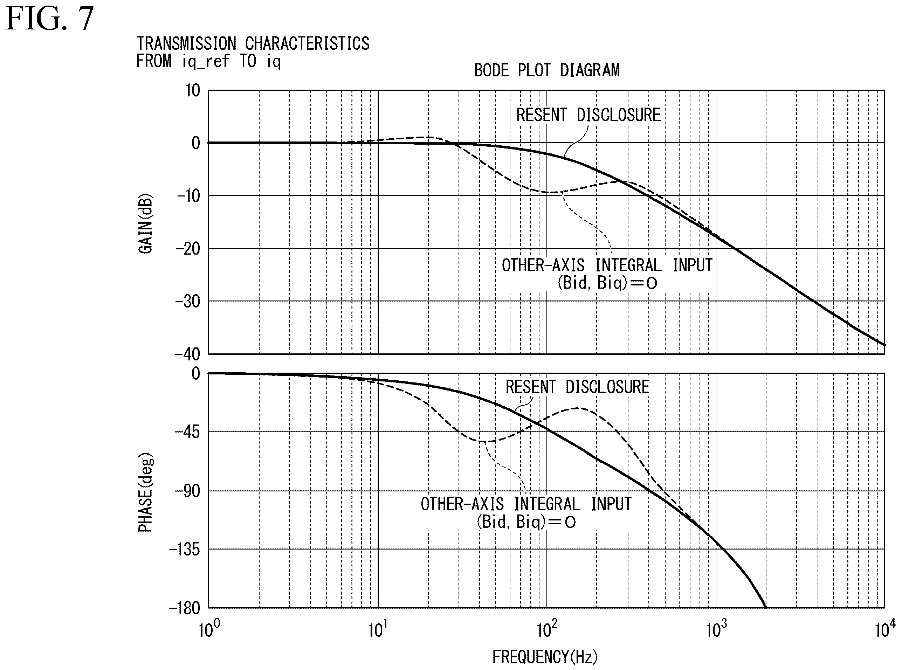

FIG. 7 is a Bode plot diagram showing transmission characteristics from the q-axis electric current command value iq_ref to the detected q-axis electric current value iq when the rotational angular velocity ω is high in the control device 1 according to Embodiment 1. In FIG. 7, a gain diagram is shown on the upper side and a phase diagram is shown on the lower side. In both the gain diagram and the phase diagram, the "present disclosure" indicates the transmission characteristics according to Embodiment 1, and the "other-axis integral input (Bid, Biq) = 0" indicates characteristics of a case where 0 (zero) is forcibly input as values of Bid and Biq (see FIGS. 3 and 4).

As shown in the gain diagram of FIG. 7, there is a drop in the gain in the vicinity of 100 Hz in "other-axis integral input (Bid, Biq) = 0." In contrast, in the "present disclosure," there is no drop in the vicinity of 100 Hz, and the transmission characteristics of an ideal first order delay system are obtained. That is, the control device 1 according to the present disclosure can obtain a suitable control result even if the rotational angular velocity ω is high.

Next, the effect brought by the d-axis voltage command value calculator 24d including the gain changer E1 will be described. When the rotating machine 10 is a permanent magnet synchronous rotating machine, a relationship between a voltage and an electric current is expressed by the following equations (1-3) and (1-4) that are voltage equations.

$$vd=(R+sLd)\times id+\omega\times Lq\times iq \quad ...(1\text{-}3)$$

$$vq=(R+sLq)\times iq+\omega\times Ld\times id+\omega\times\phi \quad ...(1\text{-}4)$$

In the equations (1-3) and (1-4), s denotes an operator of a Laplace transform, and φ denotes the number of interlinked magnetic fluxes.

When the rotational angular velocity ω of the rotating machine 10 rapidly increases, the value of the third term (ω×φ) on the right side of the equation (1-4) rapidly increases. On the other hand, if a change in the q-axis voltage command value vq is slower than a change in the rotational angular velocity ω and is regarded as sufficiently small with respect to the amount of change in

"ω×φ," the first term ((R+sLq)×iq) on the right side rapidly decreases. That is, the electric current value iq of the q-axis rapidly decreases. Also, due to the decrease in the electric current value iq of the q-axis, the q-axis electric current deviation eq in FIG. 3 rapidly increases. Thereby, the other-axis integral input Bid rapidly increases.

If no gain changer E1 is provided, the d-axis integral input Cid calculated based on the rapidly increased other-axis integral input Bid is input to the integrator 109d as it is, and the d-axis integration output Vdi rapidly decreases (the value thereof rapidly increases in the negative direction). As a result, in the equation (1-3), the left side (the voltage command value vd of the d-axis) and the first term on the right side rapidly decrease (rapidly increase in the negative direction). A rapid decrease in the first term on the right side of the equation (1-3) means that the electric current value id of the d-axis rapidly decreases (rapidly increases in the negative direction). When the electric current value id rapidly increases in the negative direction with respect to the electric current command value id_ref, it means that the rotating machine electric current in the d-axis is excessive. Also, if the electric current becomes excessive in this way, damage to the AC rotating machine 10, demagnetization of the permanent magnet, damage to the switching element of the inverter 12, or the like may be caused.

Therefore, in the present embodiment, the gain changer E1 is provided as shown in FIG. 3. When the d-axis electric current deviation ed exceeds the deviation threshold value Ith, according to an operation of the gain changer E1, the corrected other-axis integral input Bid' becomes 0, and the d-axis integral output Vdi is maintained and does not rapidly decrease. In other words, even if the q-axis electric current deviation eq increases, the excess of the electric current value id in the d-axis for the electric current command value id_ref is suppressed within the deviation threshold value Ith. Therefore, it is possible to provide the control device 1 of the AC rotating machine 10 having high stability in which damage to the AC rotating machine 10, demagnetization of the permanent magnet, damage of the switching element of the inverter 12, and the like are suppressed.

As described above, the control device 1 according to Embodiment 1 includes the inverter 12 configured to apply a voltage to the AC rotating machine 10, the electric current detector 22 configured to detect a rotating machine electric current flowing through the rotating machine 10, the d-axis voltage command value calculator 24d (first axis voltage command value calculator) configured to calculate a voltage command value vd of the d-axis (first axis) between two rotational axes of the rotating machine 10, and the q-axis voltage command value calculator 24q (second axis voltage command value calculator) configured to calculate a voltage command value vq of the q-axis (second axis) between the two rotational axes. The d-axis voltage command value calculator 24d includes the gain changer E1 configured to change the set value of the gain Kd based on the d-axis electric current deviation ed (first deviation) that is a deviation between the electric current command value id_ref of the d-axis and the detected electric current value id of the d-axis. Also, the d-axis voltage command value calculator 24d performs integral calculation using an integral input (the corrected other-axis integral input Bid') calculated based on the gain Kd and the q-axis electric current deviation eq (second deviation) that is a deviation between the electric current command value iq_ref of the q-axis and the detected electric current value iq of the q-axis and calculates the voltage command value vd of the d-axis based on the result of the integral calculation.

According to such a configuration, when the voltage command value vd of the d-axis is calculated, the proportion of the q-axis electric current deviation eq input to the integration calculation changes according to the d-axis electric current deviation ed. Thereby, for example, even when the q-axis electric current deviation eq rapidly has increased or decreased due to a rapid decrease or a rapid increase in the induced voltage, an excess in the rotating machine electric current in the d-axis can be suppressed.

Moreover, since the AC rotating machine 10 according to the present embodiment is a permanent magnet synchronous rotating machine, an induced voltage is generated in the q-axis. In consideration of this, the gain changer E1 reduces the set value of the gain Kd when the d-axis electric current deviation ed exceeds the deviation threshold value Ith. According to this configuration, for example, when the induced voltage rapidly increases due to the rapid acceleration of the rotating machine 10, an excess in the rotating machine electric current in the d-axis in the negative direction by the q-axis electric current deviation eq rapidly increasing can be suppressed.

Furthermore, the gain changer E1 may set the set value of the gain Kd to zero when the d-axis electric current deviation ed exceeds the deviation threshold value Ith. In this case, since the input value based on the q-axis electric current deviation eq to the integrator 109d is set to zero, the weak field current (d-axis rotating machine electric current) can be more effectively prevented from becoming excessive.

Moreover, the d-axis voltage command value calculation unit 24d executes the integral calculation using a value obtained by multiplying the q-axis electric current deviation eq by the rotational angular velocity ω of the AC rotating machine, the q-axis inductance Lq, and the response angular frequency ωcc for adjusting the frequency response of the rotating machine electric current with respect to the electric current command value. Thereby, a desired frequency response can be obtained without depending on the rotational angular velocity ω of the rotating machine. Likewise, the q-axis voltage command value calculation unit 24q executes the integral calculation using a value obtained by multiplying the d-axis electric current deviation ed by the rotational angular velocity ω of the AC rotating machine, the d-axis inductance Ld, and the response angular frequency ωcc for adjusting the frequency response of the rotating machine electric current with respect to the electric current command value.

Embodiment 2

Next, Embodiment 2 in the present disclosure will be described, but the basic configuration is similar to that of Embodiment 1. For this reason, description of parts equivalent to those of Embodiment 1 will be omitted and differences therebetween will be mainly described.

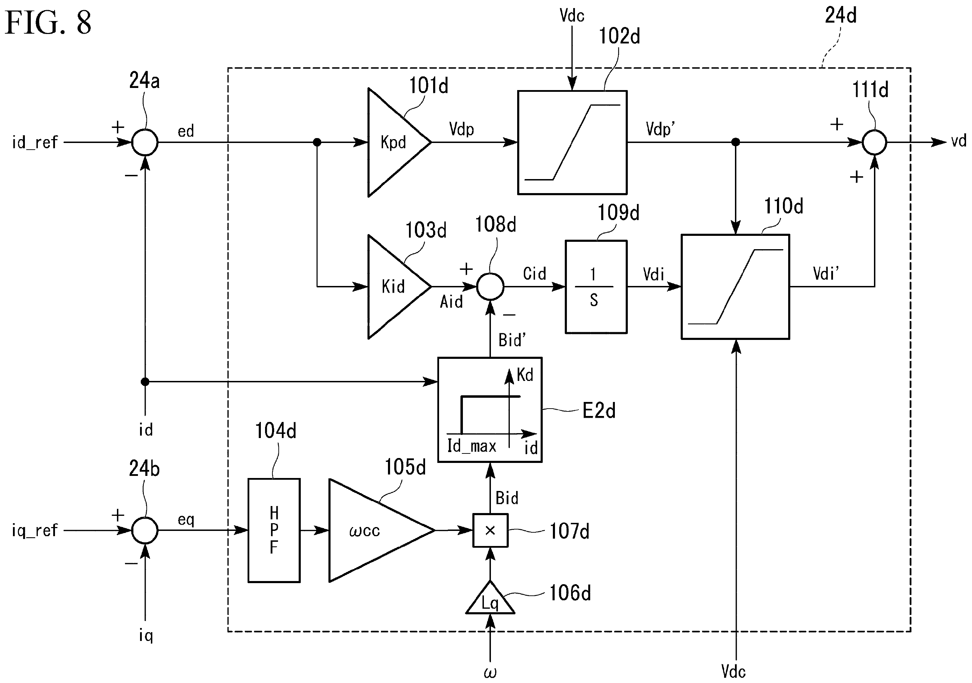

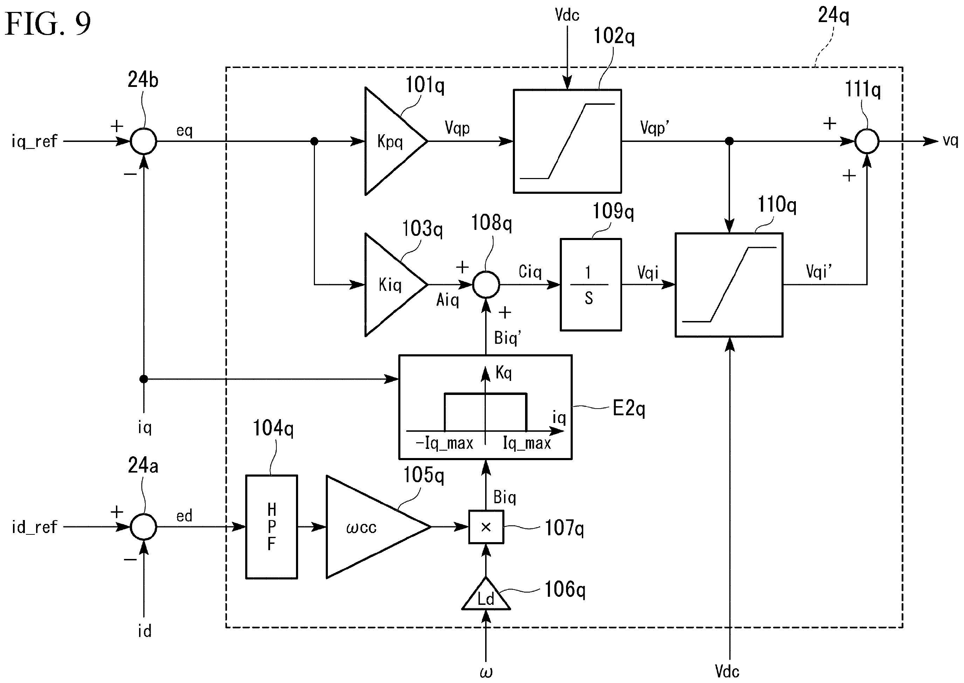

FIGS. 8 and 9 are block diagrams showing configurations of a d-axis voltage command value calculator 24d and a q-axis voltage command value calculator 24q according to Embodiment 2.

The d-axis voltage command value calculator 24d shown in FIG. 8 is different from that of Embodiment 1 (FIG. 3) in that the d-axis voltage command value calculator 24d includes a gain changer E2d instead of the gain changer E1. A detected electric current value id of a d-axis and an other-axis integral input Bid are input to the gain changer E2d. The gain changer E2d multiplies the other-axis integral input Bid by a gain Kd and outputs a multiplication result as a corrected other-axis integral input Bid'.

In Embodiment 2, the numerical value of the gain Kd changes based on the detected electric current value id of the d-axis. Specifically, the gain Kd is obtained as shown in the following equations (2-1) and (2-2).

(2-1) In the case of $id > Id\_max$, $Kd = 1$
(2-2) In the case of $id \leq Id\_max$, $Kd = 0$

Here, an electric current threshold value Id_max is a maximum value of a weak field current and is a real number less than or equal to 0. The specific numerical value of the electric current threshold value Id_max may be set to, for example, a maximum value of a negative electric current that can flow through the AC rotating machine 10 in a range in which demagnetization of the permanent magnet does not occur. Alternatively, with respect to this maximum value, a numerical value shifted to the positive side may be designated as a set value of the electric current threshold value Id_max.

Alternatively, the set value of the electric current threshold value Id_max may be changed according to an electric current command value id_ref of the d-axis. In this case, $Id\_max = id\_ref + Id\_margin$ may be defined using an electric current margin value Id_margin having a negative numerical value. According to this setting, when an amount by which the detected electric current value id of the d-axis is greater than the electric current command value id_ref exceeds the electric current margin value Id_margin, the gain Kd is set to 0, and the rotating machine electric current of the d-axis can be prevented from becoming excessive. However, if chattering in the detected electric current value id of the d-axis occurs in the vicinity of the electric current threshold value Id_max and the gain Kd alternates between 0 and 1 in a short period of time, noise may occur in the AC rotating machine 10. In this case, the change in the numerical value of the gain Kd in the electric current threshold value Id_max may be smoothed. Alternatively, when the corrected other-axis integral input Bid' is calculated, the value of the gain Kd having passed through the low-pass filter may be used.

The q-axis voltage command value calculator 24q shown in FIG. 9 is different from that of Embodiment 1 (FIG. 4) in that the q-axis voltage command value calculator 24q further includes a gain changer E2q. The detected electric current value iq of the q-axis and the other-axis integral input Biq are input to the gain changer E2q. The gain changer E2q multiplies the other-axis integral input Biq by a gain Kq and outputs a multiplication result as the corrected other-axis integral input Biq'. That is, Biq' = Kq×Biq.

An adder 108q in the present embodiment obtains a q-axis integral input Ciq by adding an own-axis integral input Aiq to the corrected other-axis integral input Biq'. The adder 108q outputs the q-axis integral input Ciq to the integrator 109q. The subsequent process is similar to that of Embodiment 1, so description thereof will be omitted.

The numerical value of the gain Kq changes based on the detected electric current value iq of the q-axis. Specifically, the gain Kq is obtained as shown in the following equations (2-3), (2-4), and (2-5).

(2-3) In the case of iq > Iq_max, Kq = 0
(2-4) In the case of -Iq_max ≤ iq ≤ Iq_max, Kq = 1
(2-5) In the case of -Iq_max > iq, Kq = 0

Here, the electric current threshold value Iq_max is a maximum value of the q-axis electric current, which is a real number greater than 0. The specific numerical value of the electric current threshold value Iq_max may be, for example, a rated electric current of the AC rotating machine 10, a rated electric current of the inverter 12, a rated electric current of the switching element provided in the inverter 12, or the like. Alternatively, a numerical value shifted from these rated electric currents to the negative side may be used as a set value of the electric current threshold value Iq_max.

Alternatively, the set value of the electric current threshold value Iq_max may be changed according to the electric current command value iq_ref of the q-axis. In this case, Iq_max = iq_ref+Iq_margin may be defined using an electric current margin value Iq_margin having a positive numerical value. According to this setting, when an amount by which the detected electric current value iq of the q-axis is greater than the electric current command value iq_ref exceeds the electric current margin value Iq_margin, the gain Kq is set to 0, and the rotating machine electric current of the q-axis can be prevented from becoming excessive. However, if chattering in the detected electric current value iq of the q-axis occurs in the vicinity of the electric current threshold value Iq_max and the gain Kq alternates between 0 and 1 in a short period of time, noise may occur in the AC rotating machine 10. In this case, the change in the numerical value of the gain Kq in the electric current threshold value Iq_max may be smoothed. Alternatively, when the corrected other-axis integral input Biq' is calculated, a value of the gain Kq having passed through the low-pass filter may be used.

As described above, the d-axis voltage command value calculator 24d according to Embodiment 2 includes the gain changer E2d configured to change the set value of the gain Kd based on the detected electric current value id of the d-axis. Also, the d-axis voltage command value calculator 24d performs integral calculation using an integral input (the corrected other-axis integral input Bid') calculated based on the gain Kd and the q-axis electric current deviation eq (second deviation) that is a deviation between the electric current command value iq_ref of the q-axis and the detected electric current value iq of the q-axis and calculates the d-axis voltage command value vd based on the result of the integral calculation.

According to this configuration, when the voltage command value vd of the d-axis is calculated, a proportion of the q-axis electric current deviation ed input to the integral calculation changes according to the detected electric current value id of the d-axis. Thereby, even if the q-axis electric current deviation rapidly increases or decreases, for example, due to a rapid decrease or increase in the induced voltage, an excess in the rotating machine electric current of the d-axis can be suppressed.

Also, since the AC rotating machine 10 according to the present embodiment is a permanent magnet synchronous rotating machine, an induced voltage is generated in the q-axis. In consideration of this, the gain changer E2d lowers the set value of the gain Kd when the detected electric current value id of the d-axis exceeds the electric current threshold value Id_max to the negative side. According to this configuration, when the induced voltage rapidly increases due to, for example, the rapid acceleration of the rotating machine 10, an excess in the rotating machine electric current of the d-axis in the negative direction due to the rapid increase in the q-axis electric current deviation eq can be suppressed.

Furthermore, the gain changer E2d may set the gain Kd to zero when the detected electric current value id of the d-axis exceeds the electric current threshold value Id_max to the negative side. In this case, since an input value based on the q-axis electric current deviation eq to the integrator 109d is set to zero, the weak field current (d-axis rotating machine electric current) can be more effectively prevented from becoming excessive.

Moreover, in Embodiment 2, the q-axis voltage command value calculator 24q also includes the gain changer E2q. That is, when the detected electric current values id and iq of the AC rotating machine 10 exceed the electric current threshold values Iq_max and Id_max, it is possible to prevent excessive rotating machine electric currents of both the d-axis and the q-axis by decreasing the gains Kd and Kq by which the term (Bid, Biq) based on the other-axis deviation (the electric current deviation eq seen from the d-axis voltage command value calculator 24d and the electric current deviation ed seen from the q-axis voltage command value calculator 24q) is multiplied.

Moreover, the electric current threshold values Id_max and Iq_max are determined based on the electric current command values id_ref and iq_ref and the electric current margin values Id_margin and Iq_margin, and therefore it is possible to prevent the rotating machine electric current exceeding this margin from flowing. Therefore, it is possible to improve the control performance of the AC rotating machine.

Embodiment 3

Next, Embodiment 3 in the present disclosure will be described, but a basic configuration thereof is similar to that of Embodiment 1. For this reason, description of parts equivalent to those of Embodiment 1 will be omitted, and differences will be mainly described.

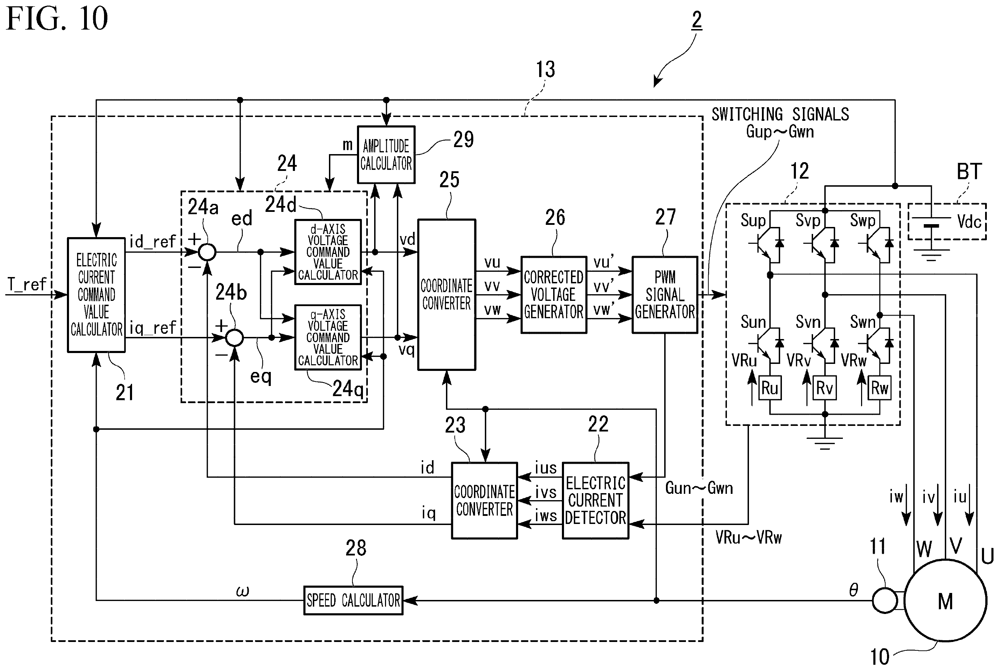

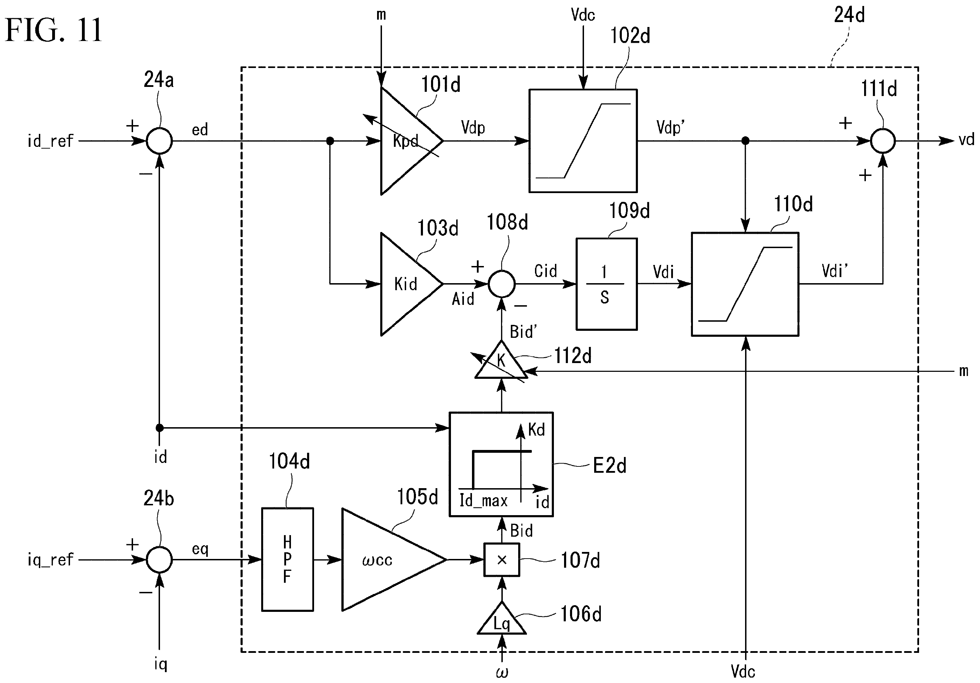

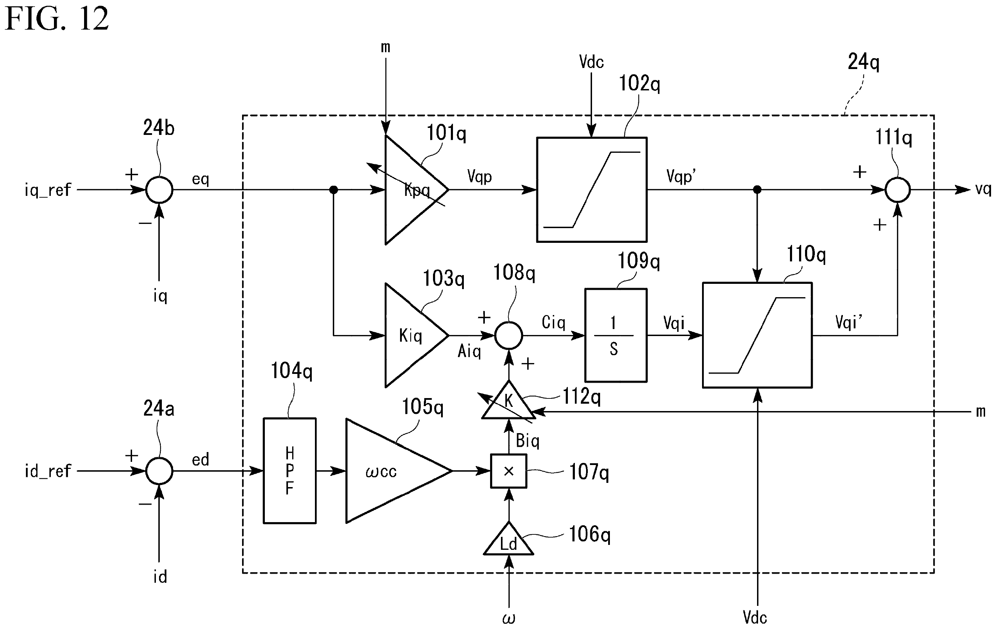

FIG. 10 is a block diagram showing a schematic configuration of a control device 2 of a rotating machine according to Embodiment 3. As shown in FIG. 10, the control device 2 is different from the control device 1 according to Embodiment 1 in that the control device 2 includes an amplitude calculator 29. Moreover, FIGS. 11 and 12 are block diagrams showing configurations of a d-axis voltage command value calculator 24d and a q-axis voltage command value calculator 24q according to Embodiment 3, respectively. The configurations of the d-axis voltage command value calculator 24d and the q-axis voltage command value calculator 24q are also different between Embodiment 1 and Embodiment 3.

As shown in FIG. 10, a d-axis voltage command value vd, a q-axis voltage command value vq, and a DC bus voltage Vdc are input to the amplitude calculator 29. The amplitude calculator 29 calculates a voltage amplitude m based on the following equation (3-1). The voltage amplitude m is a numerical value obtained by standardizing magnitudes of the d-axis voltage command value vd and the q-axis voltage command value vq using the DC bus voltage Vdc of the inverter 12.

$$m = \{(vd^2+vq^2)/(Vdc/2)\}^{0.5} \ldots (3\text{-}1)$$

As shown in FIG. 11, the d-axis voltage command value calculator 24d according to Embodiment 3 includes an amplifier 112d, and a gain changer E2d similar to that of Embodiment 2 (see FIG. 8). The amplifier 112d inputs a result of multiplying, by K, an output from the gain changer E2d to the subtractor 108d. "K" denotes a limit gain that is multiplied when an electric current deviation eq of the q-axis that is not a control target as seen from the d-axis voltage command value calculator 24d is an integral input. The voltage amplitude m is input to the amplifier 112d, and the value of the limit gain K is determined based on the value of the voltage amplitude m. In the d-axis voltage command value calculator 24d according to the present embodiment, the voltage amplitude m is also input to the d-axis proportional amplifier 101d.

The present embodiment is different from Embodiment 1 in that a proportional gain Kpd of the d-axis and the limit gain K are changed in accordance with the voltage amplitude m.

As shown in FIG. 12, the q-axis voltage command value calculator 24q of Embodiment 3 includes an amplifier 112q. The amplifier 112q inputs a result of multiplying, by K, an output from the multiplier 107q to the integrator 122q. "K" denotes a limit gain that is multiplied when the electric current deviation ed of the d-axis that is not the control target as seen from the q-axis voltage command value calculator 24q is an integral input. The voltage amplitude m is input to the amplifier 112q, and the value of the limit gain K is determined based on the value of the voltage amplitude m.

In the q-axis voltage command value calculator 24q according to the present embodiment, the voltage amplitude m is also input to the q-axis proportional amplifier 101q.

The present embodiment is different from Embodiment 1 in that a proportional gain Kpq of the q-axis and the limit gain K are changed in accordance with the voltage amplitude m.

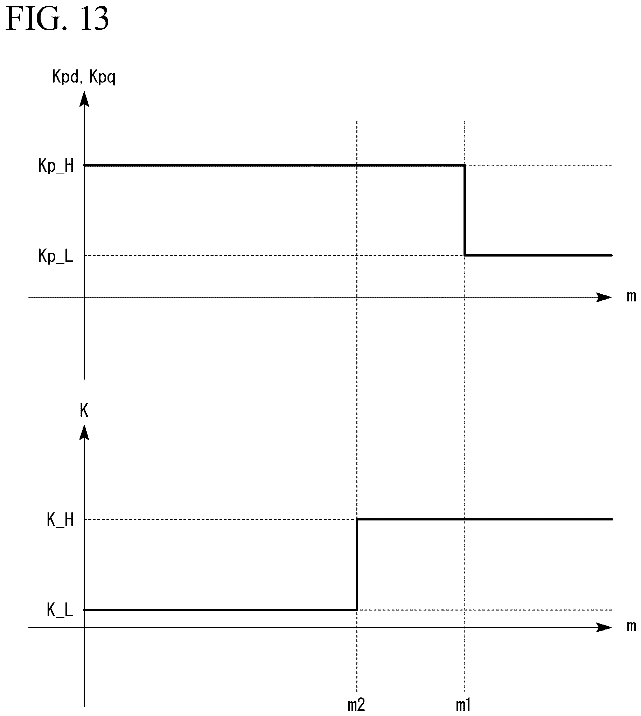

FIG. 13 shows relationships between the voltage amplitude m and the proportional gains Kpd and Kpq and the limit gain K. The vertical axis of the upper graph in FIG. 13 represents the proportional gains Kpd and Kpq, and the vertical axis of the lower graph therein represents the limit gain K. In both the upper and lower sides, the horizontal axis represents the voltage amplitude m. In FIG. 13, m1 denotes a first voltage threshold value, and m2 denotes a second voltage threshold value.

The proportional gains Kpd and Kpq are switched between a first proportional value Kp_H and a second proportional value Kp_L. The second proportional value Kp_L is less than the first proportional value Kp_H.

The limit gain K is switched between a first limit value K_H and a second limit value K_L. The second limit value K_L is less than the first limit value K_H.

As shown in FIG. 13, when the voltage amplitude m is higher than the first voltage threshold value m1, the values of the proportional gains Kpd and Kpq are set to the second proportional value Kp_L. Moreover, when the voltage amplitude m is lower than the first voltage threshold value m1, the proportional gains Kpd and Kpq are set to the first proportional value Kp_H.

When the voltage amplitude m is higher than the second voltage threshold value m2, the limit gain K is set to the first limit value K_H. Moreover, when the voltage amplitude m is lower than the second voltage threshold value m2, the limit gain K is set to the second limit value K_L. Here, the first voltage threshold value m1 is higher than the second voltage threshold value m2. Therefore, when the values of the proportional gains Kpd and Kpq are Kp_L, the value of the limit gain K is K_H.

Thus, only when the limit gain K is a high value K_H (i.e., a state in which non-interference control between the d- and q-axes is sufficiently effective), a process of decreasing the proportional gains Kpd and Kpq is performed, and therefore control stability can be ensured even if the proportional gains Kpd and Kpq are low. Moreover, when the limit gain K is a low value K_L, the proportional gains Kpd and Kpq are set to a high value Kp_H in order that the control stability can be ensured even in a state in which non-interference control between the d- and q-axes is not sufficient. Specifically, the values of Kp_H and Kp_L are set such that responses from the electric current command values id_ref and iq_ref to the rotating machine electric currents iu, iv, and iw are preferably within the range of 300 Hz to 1000 Hz and the range of 100 Hz to 300 Hz, respectively. For example, the value of K_H is set to 0.7 or more, and the value of K_L is set to 0.3 or less.

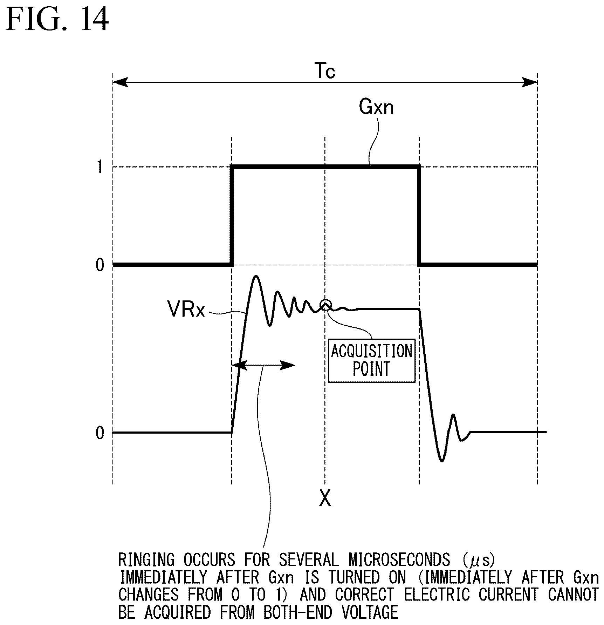

Next, a process of preferably setting the first voltage threshold value m1 will be described. Gxn shown in FIG. 14 denotes an example of a waveform of any one of the switching signals Gun, Gvn, and Gwn in the lower arm-switching elements Sun, Svn, and Swn. Moreover, VRx denotes an example of a waveform of any one of the voltages VRu, VRv, and VRw between both ends of the shunt resistors Ru, Rv, and Rw. In the example shown in FIG. 14, after the signal Gxn changes from 0 to 1, ringing occurs in the voltage VRx between both ends of the shunt resistor for several microseconds (μs). Ringing is a phenomenon in which the voltage between both ends of the shunt resistor changes for a certain period of time when switching is performed in the inverter 12. If the electric current detector 22 acquires the pre-conversion detected electric currents ius, ivs, and iws based on the voltages VRu, VRv, and VRw between both ends of the shunt resistors including such ringing, an error may be contained in the detection result. If an error is contained in the pre-conversion detected electric currents ius, ivs, and iws, an error is also contained in the detected electric current values id and iq after coordinate conversion.

In order to accurately obtain the pre-conversion detected electric currents ius, ivs, and iws, the ON-time of the lower arm-switching elements Sun, Svn, and Swn corresponding thereto is preferably greater than a set time threshold value Tmin in accordance with the convergence time of the ringing. In order to make the ON-time of the lower arm-switching elements Sun, Svn, and Swn greater than the time threshold value Tmin, it is only necessary to set the voltage to be input to the PWM signal generator 27 to a value of Vdc×(Tc-Tmin)/Tc or less as indicated by the dash-dotted line of FIG. 2.

In FIG. 2, the corrected voltage commands vu', vv', and vw' (i.e., the voltage to be input to the PWM signal generator 27) are all Vdc×(Tc-Tmin)/Tc or less. Therefore, it is possible to eliminate errors due to ringing and to obtain the pre-conversion detected electric currents ius, ivs, and iws with high accuracy based on the voltages VRu, VRv, and VRw between both ends of the shunt resistors. In this way, a detection method of obtaining the pre-conversion detected electric currents ius, ivs, and iws based on the voltages VRu, VRv, and VRw between both ends of the shunt resistors corresponding to the three phases is referred to as "three-phase detection."

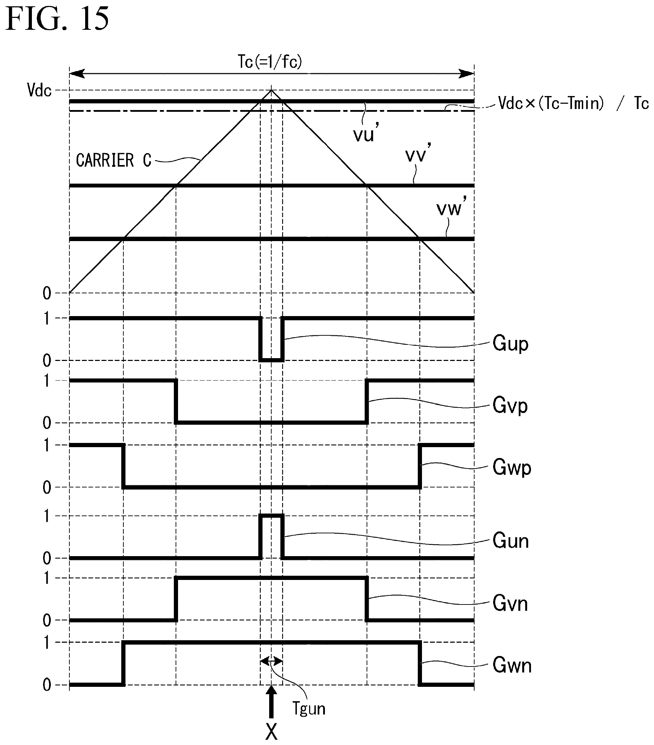

Meanwhile, when the voltage amplitude m increases due to an increase in the rotational speed of the rotating machine 10 or the like, some of the corrected voltage commands vu', vv', and vw' may take a large value close to the maximum value Vdc of the carrier triangle wave C. In the example of FIG. 15, the value of the corrected voltage command vu' is greater than the value of Vdc×(Tc-Tmin)/Tc (hereinafter also referred to as an "upper limit value"). In this case, a difference between the time when Gun is switched from 0 to 1 and the time at a timing X becomes small. Thus, the ringing effect is contained in the voltage VRu between both ends of the shunt resistor of the U-phase acquired at the timing X.

Therefore, the pre-conversion detected electric current for the phase in which the ON-time of the switching signals Gun, Gvn, and Gwn of the lower arm-switching elements is less than the time threshold value Tmin may be generated from the other two phases. In this way, a detection method of obtaining the pre-conversion detected electric current of one of the three phases based on the pre-conversion detected electric currents of the other two phases is referred to as "two-phase detection." For example, when the ON-time of the switching signal Gun is less than the time threshold value Tmin, the pre-conversion detected electric current ius of the U-phase may be calculated according to ius = -ivs-iws. Likewise, a calculation process may be performed as ivs = -ius-iws when the ON-time of the switching signal Gvn is less than the time threshold value Tmin, and a calculation process may be performed as iws = -ius-ivs when the ON-time of the switching signal Gwn is less than the time threshold value Tmin.

A relationship between the number of phases used for electric current detection and the voltage amplitude m is as follows. That is, when the voltage amplitude m is low and instantaneous values of the three-phase corrected voltage commands vu', vv', and vw' are all less than or equal to the upper limit value (Vdc×(Tc-Tmin)/Tc), "three-phase detection" is used. Alternatively, when the voltage amplitude m is high and the instantaneous value of any one of the three-phase corrected voltage commands vu', vv', and vw' is greater than or equal to the upper limit value (Vdc×(Tc-Tmin)/Tc), "two-phase detection" is used. Here, when "three-phase detection" and "two-phase detection" are compared, "three-phase detection" has higher accuracy. Therefore, in order to increase the control accuracy of the rotating machine 10, it is preferable to use "three-phase detection" as much as possible. However, from the viewpoint of increasing the output of the rotating machine 10, it may be preferable to increase the voltage amplitude m and to use "two-phase detection."

Therefore, in the present embodiment, the first voltage threshold value m1 is set to "(Tc-Tmin)/Tc." It can be said that "(Tc-Tmin)/Tc" is a numerical value standardized by dividing the aforementioned upper limit value of "Vdc×(Tc-Tmin)/Tc" by Vdc. By setting the first voltage threshold value m1 in this way, the following effects can be obtained. When the voltage amplitude m is greater than the first voltage threshold value m1, "two-phase detection" is used, and at this time, the proportional gains Kpd and Kpq are set to a low value Kp_L. Thereby, the effect of a decrease in the electric current detection accuracy can be reduced, and vibration and noise generated from the rotating machine 10 can be prevented from increasing. At the same time, the limit gain K is set to a high value K_H, so non-interference control is effective, and control stability is maintained. Moreover, when the voltage amplitude m is less than the first voltage threshold value m1, "three-phase detection" is used, and at this time, the proportional gains Kpd and Kpq are set to a large value Kp_H (see FIG. 13). Since the electric current detection accuracy is high in three-phase detection, the dependence on non-interference control is reduced. Thereby, the vibration and noise occurring in the rotating machine 10 due to the noise contained in the rotational angular velocity ω can be reduced.

It is only necessary to set the second voltage threshold value m2 to a value lower than the first voltage threshold value m1. However, if noise contained in the detected value of the rotational angular velocity ω is not problematic, it is not necessarily necessary to switch the value of the limit gain K at the second voltage threshold value m2. Specifically, if the voltage amplitude m is greater than or equal to the first voltage threshold value m1, the values of the proportional gains Kpd and Kpq are set to Kp_L, otherwise, the values of the proportional gains Kpd and Kpq are set to Kp_H, and the value of the limit gain K may be always set to a constant (K_H) regardless of the voltage amplitude m.

Moreover, in general AC rotating machines including the AC rotating machine 10 according to the present embodiment, the voltage applied to the rotating machine and the rotational speed (or the rotational angular velocity ω) of the rotating machine are approximately in a proportional relationship. Therefore, switching regarding the proportional gains Kpd and Kpq and the limit gain K may be performed using a threshold value related to the rotational speed (or the rotational angular velocity ω) instead of the threshold value related to the voltage amplitude m described above. For example, the rotational speed when the voltage amplitude m coincides with the first voltage threshold value m1 may be a first rotational speed threshold value n1, and the rotational speed when the voltage amplitude m coincides with the second voltage threshold value m2 may be a second rotational speed threshold value n2. In this case, the switching of the proportional gain Kpd or Kpq or the limit gain K based on the comparison between the voltage amplitude m and the threshold values m1 and m2 described above can be replaced with switching based on the comparison between the rotational speed and the threshold values n1 and n2. Similarly, the rotational angular velocity ω when the voltage amplitude m coincides with the first voltage threshold value m1 may be a first rotational angular velocity threshold value ω1, and the rotational angular velocity ω when the voltage amplitude m coincides with the second voltage threshold value m2 may be a second rotational angular velocity threshold value ω2. In this case, the switching of the proportional gain Kpd or Kpq or the limit gain K based on the comparison between the voltage amplitude m and the threshold values m1 and m2 described above can be replaced with switching based on the comparison between the rotational angular velocity ω and the threshold values ω1 and ω2.

Alternatively, switching according to the voltage amplitude m and switching according to the rotational speed (or the rotational angular velocity ω) may be used together. As a specific example, switching of the proportional gains Kpd and Kpq may be performed based on the comparison between the voltage amplitude m and the first voltage threshold value m1, and switching of the limit gain K may be performed based on the comparison between the rotational speed (or the rotational angular velocity ω) and the second rotational speed threshold value n2 (or the second rotational angular velocity threshold value ω2).

The case where the values of the proportional gains Kpd and Kpq are switched based on the comparison between the voltage amplitude m and the first voltage threshold value m1, the comparison between the rotational speed and the first rotational speed threshold value n1, or the comparison between the rotational angular velocity ω and the first rotational angular velocity threshold value ω1 has been described above. However, for example, when the rotating machine electric current becomes excessive and exceeds the threshold value, the values of the proportional gains Kpd and Kpq may be fixed at Kp_H regardless of the voltage amplitude m or the rotational speed. When the rotating machine electric current is excessive, the state where the rotating machine electric current is excessive can be shortened by setting the proportional gains Kpd and Kpq to a large value. Thereby, failure of the control device of the rotating machine 10 can be prevented.

Moreover, when a part of the control device of the rotating machine 10 fails and the remaining parts that do not fail continue to operate, the proportional gains Kpd and Kpq may be always set to a large value (Kp_H) to improve system stability.

Moreover, when the values of the proportional gains Kpd and Kpq are switched between Kp_L and Kp_H, a slope (inclination) may be provided and be gradually switched such that the control is not discontinuous. Likewise, when the value of the limit gain K is switched between K_L and K_H, a slope (inclination) may be provided and be gradually switched.

As described above, in Embodiment 3, the first axis voltage command value calculator (for example, the d-axis voltage command value calculator 24d) calculates the voltage command value (for example, vd) of the first axis using a value obtained by multiplying the first deviation (for example, the d-axis electric current deviation ed) by the proportional gain (for example, Kpd). The proportional gain is switched between the first proportional value Kp_H and the second proportional value Kp_L less than the first proportional value Kp_H. Also, the proportional gain is set to the second proportional value Kp_L when the voltage amplitude m calculated based on the voltage command value is greater than or equal to the first voltage threshold value m1, when the rotational speed of the AC rotating machine 10 is greater than or equal to the first rotational speed threshold value n1, or when the rotational angular velocity ω of the AC rotating machine 10 is greater than or equal to the first rotational angular velocity threshold value ω1. According to this configuration, when the rotational angular velocity ω is large, by setting the proportional gain to a small value (Kp_L), the high-frequency noise component included in the first deviation can be reduced, and the control device 2 of the AC rotating machine 10 with low noise can be provided.

Moreover, in Embodiment 3, the first axis voltage command value calculator performs integral calculation using a value obtained by multiplying the second deviation by the limit gain K, and the limit gain K is switched between the first limit value K_H and the second limit value K_L smaller than the first limit value K_H. Also, when the voltage amplitude m is less than or equal to the second voltage threshold value m2 smaller than the first voltage threshold value m1, when the rotational speed of the AC rotating machine 10 is less than or equal to the second rotational speed threshold value n2 smaller than the first rotational speed threshold value n1, or when the rotational angular velocity ω of the AC rotating machine 10 is less than or equal to the second rotational angular velocity threshold value ω2 smaller than the first rotational angular velocity threshold value ω1, the limit gain K is set to the second limit value K_L. According to this configuration, when the rotational angular velocity ω is low, the input of the second deviation for the integral calculation can be limited to a small value by setting the limit gain to a small value (K_L). For this reason, the high-frequency noise component included in the second deviation can be reduced, and the control device 2 of the AC rotating machine 10 with low noise can be provided.

Moreover, the inverter 12 includes the upper arm-switching elements Sup, Svp, and Swp, the lower arm-switching elements Sun, Svn, and Swn, and the shunt resistors Ru, Rv, and Rw corresponding to the three phases (U, V, and W). When the voltage amplitude m is smaller than the first voltage threshold value m1, the electric current detector 22 detects the rotating machine electric currents iu, iv, and iw of the three phases based on the voltages VRu, VRv, and VRw between both ends of the corresponding shunt resistors (i.e., "three-phase detection" is used). According to this configuration, it is possible to suppress the inclusion of errors due to the influence of ringing in the detection results of the rotating machine electric currents iu, iv, and iw. Therefore, it is possible to control the AC rotating machine 10 with high accuracy.

Moreover, when the rotating machine electric current exceeds the threshold value (i.e., when the rotating machine electric current is excessive), the proportional gains Kpd and Kpq may be set to the first proportional value Kp_H regardless of the voltage amplitude m or the like. In this case, it is possible to shorten the duration of the state in which the rotating machine electric current is excessive. Therefore, the failure of the control device 2 can be prevented.

Moreover, when a failure occurs in at least one location in the control device 2, the proportional gains Kpd and Kpq may be set to the first proportional value Kp_H regardless of the voltage amplitude m or the like. In this case, the system stability at the time of occurring the failure can be improved to suppress the occurrence of a secondary failure.

Embodiment 4

Next, Embodiment 4 will be described. In the present embodiment, a case where technology described in Embodiments 1 to 3 is applied to the control of a rotating machine included in an electric power-steering device will be described.

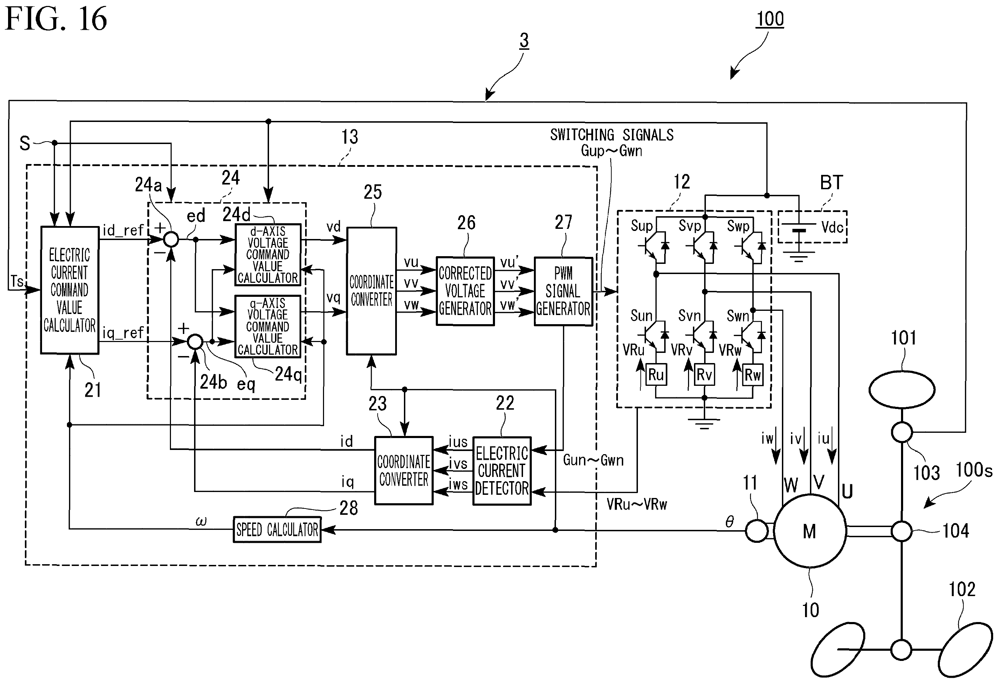

As shown in FIG. 16, an electric power-steering device 100 according to the present embodiment includes a control device 3, a steering wheel 101, a rotating machine 10, and a torque detector 103. The electric power-steering device 100 is mounted on a vehicle. The steering wheel 101 is operated by a driver. By operating the steering wheel 101, front wheels 102 of the vehicle are driven. Because the basic configuration of the control device 3 is similar to that of the control device 1 in Embodiment 1, detailed descriptions thereof will be omitted and differences will be mainly described.

The torque detector 103 detects steering torque Ts of the steering wheel 101 from the driver and outputs a detection result to the control device 3. A driving force of the rotating machine 10 is transmitted to a steering system 100s of the vehicle via a driving force transmission mechanism 104. The steering system 100s includes the steering wheel 101, the front wheels 102, and the like. The electric power-steering device 100 assists the driver in steering the vehicle by using the driving force generated by the rotating machine 10 as assist torque.

The electric current command value calculator 21 in the control device 3 performs a calculation related to a torque current command value (a q-axis electric current command value iq_ref) different from that in Embodiment 1, so this difference will be described. The steering torque Ts and a travel speed S of the vehicle are input to the electric current command value calculator 21, and the electric current command value calculator 21 calculates the q-axis electric current command value iq_ref based on these inputs.

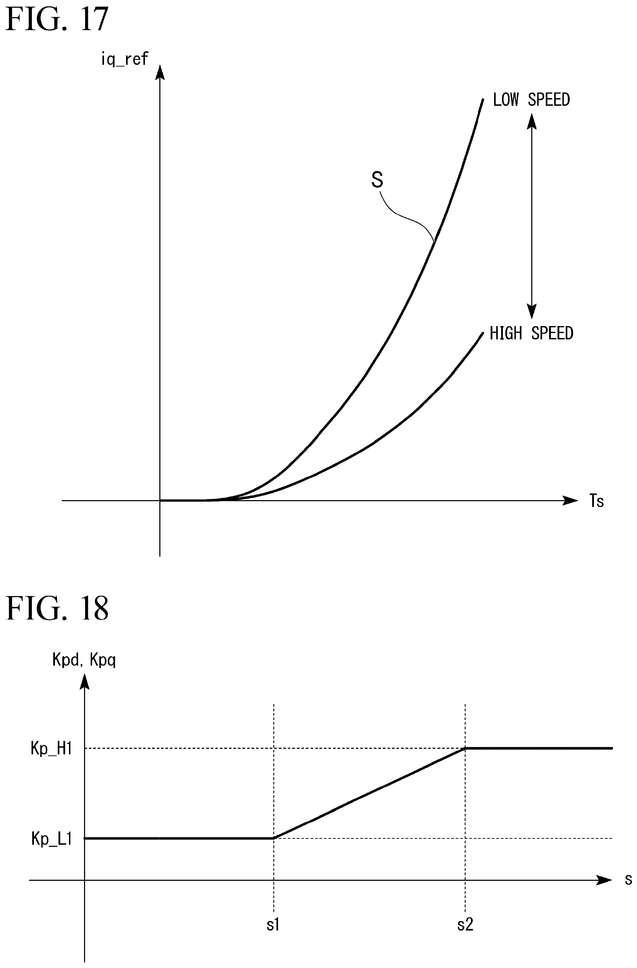

FIG. 17 is a graph showing a set value of the q-axis electric current command value iq_ref according to the steering torque Ts and the travel speed S of the vehicle. As shown in this graph, as the steering torque Ts increases, the value of the electric current command value iq_ref increases, and the gradient of the change thereof increases. Moreover, as the travel speed S of the vehicle increases, the value of the electric current command value iq_ref decreases. In addition, the value of the electric current command value iq_ref may be determined by further taking the damping torque obtained based on the rotational angular velocity ω or the like into consideration.

As shown in FIG. 17, as the travel speed S of the vehicle decreases, the gradient of the q-axis electric current command value iq_ref increases with respect to the steering torque Ts. As a result, when detection noise is included in the steering torque Ts, the influence thereof on the q-axis electric current command value iq_ref increases, resulting in the generation of vibration and noise from the rotating machine 10, discomfort to the touch of the steering wheel 101, or the like.

Therefore, in the voltage command value calculation unit 24 in Embodiment 4, the proportional gain Kpd in the d-axis voltage command value calculator 24d and the proportional gain Kpq in the q-axis voltage command value calculator 24q are changed according to the travel speed S of the vehicle as shown in FIG. 18. "Kp_H1" is referred to as a first velocity reference value and "Kp_L1" is referred to as a second velocity reference value. The second velocity reference value Kp_L1 is smaller than the first velocity reference value Kp_H1.

When the travel speed S of the vehicle is less than or equal to s1, the values of the proportional gains Kpd and Kpq are set to Kp_L1. Thus, it is possible to suppress the sensitive reaction of the q-axis electric current command value iq_ref to the pulsation of the steering torque Ts by setting the proportional gains Kpd and Kpq to be low. Moreover, when the travel speed S of the vehicle is s2 or more, the influence of the pulsation of the steering torque Ts on the q-axis electric current command value iq_ref is small, and therefore the proportional gains Kpd and Kpq are set to a high value Kp_H1. Thus, it is possible to provide an electric power-steering device in which the occurrence of vibration and abnormal noise of the rotating machine 10 due to noise included in the detected steering torque value or the discomfort that the driver feels from the steering wheel 101 is suppressed by switching the proportional gains Kpd and Kpq in accordance with the travel speed S of the vehicle.

As shown in FIG. 18, when the travel speed S of the vehicle is within the range of s1 to s2, the values of the proportional gains Kpd and Kpq are continuously changed within the range of Kp_H1 to Kp_L1. Thereby, it is possible to suppress the discomfort or the like that the driver feels due to rapidly switching the set values of the proportional gains Kpd and Kpq. The proportional gains Kpd and Kpq may be switched stepwise between Kp_H1 and Kp_L1.

As described above, the electric power-steering device 100 according to the present embodiment includes the control device 3, the AC rotating machine 10, and the driving force transmission mechanism 104 configured to transmit the driving force of the AC rotating machine 10 to the steering system 100s of the vehicle. According to such a configuration, the electric power-steering device 100 having both quietness and steering stability can be provided.

Moreover, in the present embodiment, the proportional gains Kpd and Kpq are switched between the first velocity reference value Kp_H1 and the second velocity reference value Kp_L1 smaller than the first velocity reference value Kp_H1. When the travel speed S of the vehicle is smaller than the threshold value s2, the voltage command value calculation unit 24 sets the proportional gains Kpd and Kpq to a value smaller than the first velocity reference value Kp_H1. According to this configuration, quietness can be improved even in situations where the vehicle speed is low and steering noise is likely to be echoed.

Embodiment 5

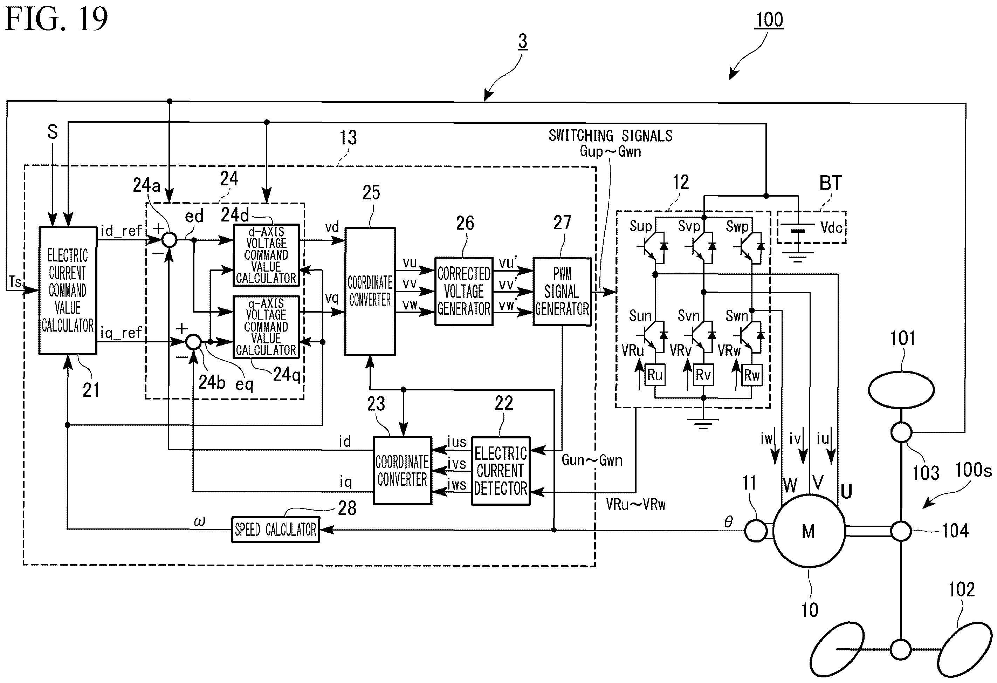

Next, Embodiment 5 will be described. As shown in FIG. 19, an electric power-steering device 100 according to the present embodiment includes a control device 3 similar to that of Embodiment 4. The technology of Embodiment 5 is different from the technology described in Embodiment 4 in that a detected value to be input to the voltage command value calculation unit 24 is changed from a travel speed S of a vehicle to steering torque Ts, and that a part of calculation content in the voltage command value calculation unit 24 is different. The others are similar to those of Embodiment 4, so descriptions thereof will be omitted.

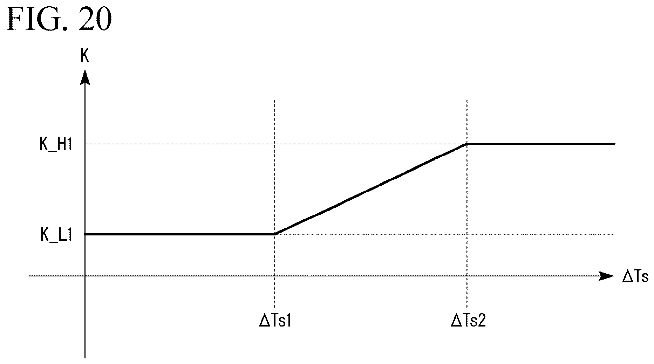

In FIG. 17 described in Embodiment 4, in each state where the travel speed S of the vehicle is low or high, as the steering torque Ts decreases, the inclination of the q-axis electric current command value iq_ref with respect to the steering torque Ts decreases. That is, a margin in steering stability increases as the steering torque Ts decreases, so there is room to reduce the limit gain K described in Embodiment 3. Therefore, in the voltage command value calculation unit 24 according to Embodiment 5, the limit gain K is changed as shown in FIG. 20.

In FIG. 20, "△Ts" denotes an amount of change per unit time of the steering torque Ts, "K_H1" denotes a first torque reference value, and "K_L1" denotes a second torque reference value. The second torque reference value K_L1 is smaller than the first torque reference value K_H1. The limit gain K changes in the range of K_L1 to K_H1 in accordance with the magnitude of the amount of change △Ts. Specifically, when △Ts is less than or equal to the first torque threshold value △Ts1, the value of the limit gain K is set to K_L1. When △Ts is greater than or equal to the second torque threshold value △Ts2, the value of the limit gain K is set to K_H1. When △Ts is in the range of △Ts1 to △Ts2, the value of the limit gain K continuously changes within the range of K_L1 to K_H1. Thereby, it is possible to reduce the vibration and noise of the rotating machine 10 in a region where the change in the steering torque Ts is small.

In FIG. 20, the horizontal axis represents △Ts. However, a similar effect can be obtained even if the horizontal axis represents the gradient (△iq_ref/△Ts) of the graph of FIG. 17. The above-described gradient (△iq_ref/△Ts) is referred to as an "electric current torque gradient" in the present specification. That is, the electric current torque gradient is a ratio of an amount of change (△iq_ref) in the q-axis electric current command value iq_ref to an amount of change (△Ts) in the steering torque Ts. When the electric current torque gradient is less than the threshold value, the proportional gains Kpd and Kpq may be set to a small value Kp_L1. Moreover, when at least one of the electric current command values iq_ref and id_ref is smaller than the threshold value or when the steering torque Ts is less than the threshold value, the proportional gains Kpd and Kpq may be set to a small value (for example, Kp_L1).

When the steering torque Ts or the electric current command values iq_ref and the id_ref are small, the steering noise is more noticeable. Therefore, Embodiment 5 proposes a configuration in which the proportional gains Kpd and Kpq are set to values lower than the first velocity reference value Kp_H1 when the electric current command values iq_ref and the id_ref are less than or equal to the threshold value, when a gradient (an electric current torque gradient △iq_ref/△Ts) in a graph representing the relationship between the steering torque Ts and the torque current command value iq_ref is smaller than the threshold value, or when the amount of change △Ts per unit time of the steering torque Ts is smaller than the first torque threshold value △Ts1. Thereby, in a situation where the steering noise is likely to be noticeable, the non-interference control can be weakened to ensure quietness.

In Embodiments 4 and 5, instead of inputting the rotational angular velocity ω to the inductance amplifiers 106d and 106q in accordance with non-interference control, a result of the rotational angular velocity ω passing through a low-pass filter may be input thereto. The cut-off frequency of the low-pass filter is preferably greater than the upper limit value (for example, 5 Hz) of the steering frequency of the electric power-steering device 100. In this case, an effect of reducing the abnormal noise and vibration of the rotating machine 10 caused by the noise component contained in the rotational angular velocity ω by introducing non-interference control is obtained. Therefore, a quiet electric power-steering device 100 can be provided.

While Embodiments 1 to 5 have been described above, the present disclosure is not limited to the above-described embodiments. The scope of the present invention is defined by the appended claims.

Each constituent element provided in the control devices 1 to 3 of the rotating machine and the electric power-steering device 100 described above has a computer system therein. Also, the process in each constituent element provided in the control devices 1 to 3 of the rotating machine and the electric power-steering device 100 described above may be carried out by recording a program for implementing the function of each constituent element provided in the control devices 1 to 3 of the rotating machine and the electric power-steering device 100 described above on a computer-readable recording medium, and by reading the program recorded on the recording medium into the computer system to execute the program. Here, "reading the program recorded on the recording medium into the computer system to execute the program" includes installing the program in the computer system. The term "computer system" as used herein includes an operating system (OS) and hardware such as peripheral devices.

Moreover, the "computer system" may include a plurality of computer devices connected together via networks including the Internet, a WAN, a LAN, and communication lines such as a dedicated line. Moreover, "the computer-readable recording medium" refers to a flexible disk, a magneto-optical disk, a ROM. a portable medium such as a CD-ROM, or a storage device such as a hard disk provided inside the computer system. Thus, the recording medium storing a program may be a non-transient recording medium such as a CD-ROM.

Moreover, the recording medium also includes an internally or externally provided recording medium that can be accessed from a distribution server to distribute the program. The program may be divided into a plurality of segments, which are downloaded at different timings and then combined in each constituent element provided in the control devices 1 to 3 of the rotating machine and the electric power-steering device 100, or the distribution servers for distributing the segments of the divided program may be different. Furthermore, "the computer-readable recording medium" also includes one that retains a program for a predetermined period of time such as a volatile memory (RAM) inside a computer system that acts as a server or a client when a program is sent via a network. Moreover, the above-described program may be for implementing a part of the above-described functions. Furthermore, the above-described program may be a so-called difference file (difference program), which can implement the above-described functions in combination with a program already recorded in the computer system.

[Reference Signs List]

1 to 3 Control device
10 AC rotating machine
12 Inverter
22 Electric current detector
24d, 24q First axis voltage command value calculator, second axis voltage command value calculator
100 Electric power-steering device
104 Driving force transmission mechanism
E1, E2d Gain changer
id, iq Detected electric current value
id_ref, iq_ref Electric current command value
iq_ref Torque current command value
iu, iv, iw Rotating machine electric current
K Limit gain
Kd Gain
K_H First limit value
K_L Second limit value
Kp_H First proportional value
Kp_H1 First velocity reference value
Kp_L Second proportional value
Kp_L1 Second velocity reference value
Kpd, Kpq Proportional gain
Ld d-axis inductance
m Voltage amplitude
m1 First voltage threshold value
m2 Second voltage threshold value
n1 First rotational speed threshold value
n2 Second rotational speed threshold value
Ru, Rv, Rw Shunt resistor
S Travel speed
100s Steering system of vehicle
Sun, Svn, Swn Lower arm-switching element
Sup, Svp, Swp Upper arm-switching element
Ts Steering torque
vd, vq First axis voltage command value, second axis voltage command value
VRu, VRv, VRw Voltage between both ends
vu, vv, vw Voltage command value
$\Delta$Ts Amount of change in steering torque
$\omega$ Rotational angular velocity
$\omega$1 First rotational angular velocity threshold value
$\omega$2 Second rotational angular velocity threshold value
$\omega$cc Response angular frequency

**Claims**

1. A control device (1, 2, 3) for an AC rotating machine (10), comprising:

   an inverter (12) configured to apply a voltage to the AC rotating machine (10);
   an electric current detector (22) configured to detect a rotating machine electric current flowing through the AC rotating machine (10);
   a first axis voltage command value calculator (24d) configured to calculate a voltage command value of a first axis between two rotational axes of the AC rotating machine (10); and
   a second axis voltage command value calculator (24q) configured to calculate a voltage command value of a second axis between the two rotational axes,
   wherein
   the first axis voltage command value calculator (24d) includes a gain changer (E1, E2d) configured to change a set value of a gain based on a detected electric current value of the first axis or a first deviation that is a deviation between an electric current command value of the first axis and the detected electric current value of the first axis,
   **characterized in that**
   the first axis voltage command value calculator (24d) is adapted to perform integral calculation using an integral input calculated based on the gain and a second deviation that is a deviation between an electric current command value of the second axis and a detected electric current value of the second axis and calculates the voltage command value of the first axis based on a result of the integral calculation.

2. The control device (1, 2, 3) for an AC rotating machine (10) according to claim 1,

   wherein the AC rotating machine (10) is a permanent magnet synchronous rotating machine,
   wherein the first axis is a d-axis that connects a central axis of a rotor and a magnetic pole in the AC rotating machine (10), and
   wherein the gain changer (E1, E2d) decreases the set value of the gain when a d-axis electric current deviation that is a deviation between an electric current command value of the d-axis and a detected electric current value of the d-axis exceeds a deviation threshold value or when the detected electric current value of the d-axis exceeds an electric current threshold value to a negative side.

3. The control device (1, 2, 3) for an AC rotating machine (10) according to claim 1 or 2,

wherein the first axis voltage command value calculator (24d) executes the integral calculation using a value obtained by multiplying the second deviation by a rotational angular velocity of the AC rotating machine (10), an inductance of the second axis, and a response angular frequency for adjusting a frequency response of the rotating machine electric current to the electric current command value.

4. The control device (1, 2, 3) for an AC rotating machine (10) according to claim 2,
wherein the gain changer (E1, E2d) sets the set value of the gain to zero when the d-axis electric current deviation exceeds the deviation threshold value or when the detected electric current value of the d-axis exceeds the electric current threshold value to the negative side.

5. The control device (1, 2, 3) for an AC rotating machine (10) according to any one of claims 1 to 4,

wherein the first axis voltage command value calculator (24d) calculates the voltage command value of the first axis using a value obtained by multiplying, by a proportional gain, the first deviation that is the deviation between the electric current command value of the first axis and the detected electric current value of the first axis of the rotating machine electric current,
wherein the proportional gain is switched between a first proportional value and a second proportional value less than the first proportional value, and
wherein the proportional gain is set to the second proportional value when a voltage amplitude calculated based on the voltage command value is greater than or equal to a first voltage threshold value, when a rotational speed of the AC rotating machine (10) is greater than or equal to a first rotational speed threshold value, or when a rotational angular velocity of the AC rotating machine (10) is greater than or equal to a first rotational angular velocity threshold value.

6. The control device (1, 2, 3) for an AC rotating machine (10) according to claim 5,

wherein the first axis voltage command value calculator (24d) executes the integral calculation using a value obtained by multiplying the second deviation by a limit gain,
wherein the limit gain is switched between a first limit value and a second limit value less than the first limit value, and
wherein the limit gain is set to the second limit value when the voltage amplitude is less than or equal to a second voltage threshold value less than the first voltage threshold value, when the rotational speed of the AC rotating machine (10) is less than or equal to a second rotational speed threshold value less than the first rotational speed threshold value, or when the rotational angular velocity of the AC rotating machine (10) is less than or equal to a second rotational angular velocity threshold value less than the first rotational angular velocity threshold value.

7. The control device (1, 2, 3) for an AC rotating machine (10) according to claim 5 or 6,

wherein the inverter (12) includes three sets corresponding to three phases, each of the three sets including an upper arm-switching element (Sup, Svp, Swp), a lower arm-switching element (Sun, Svn, Swn), and a shunt resistor (Ru, Rv, Rw), and
wherein the electric current detector (22) detects the rotating machine electric current of each of the three phases based on a voltage between both ends of the shunt resistor (Ru, Rv, Rw) corresponding thereto when the voltage amplitude is less than the first voltage threshold value.

8. The control device (1, 2, 3) for an AC rotating machine (10) according to any one of claims 5 to 7,
wherein the first axis voltage command value calculator (24d) sets the proportional gain to the first proportional value when the rotating machine electric current exceeds a threshold value.

9. The control device (1, 2, 3) for an AC rotating machine (10) according to any one of claims 5 to 7,
wherein the first axis voltage command value calculator (24d) sets the proportional gain to the first proportional value when a failure has occurred in at least one location in the control device (1, 2, 3) for the AC rotating machine (10).

10. The control device (1, 2, 3) for an AC rotating machine (10) according to any one of claims 1 to 9,
wherein the gain changer (E1, E2d) is configured to change the set value of the gain based on the first deviation or the detected electric current value of the first axis and based on neither the second deviation nor the detected electric current value of the second axis.

11. An electric power-steering device, comprising:

the control device (1, 2, 3) for an AC rotating machine (10) according to any one of claims 1 to 10;
the AC rotating machine (10); and
a driving force transmission mechanism (104) configured to transmit a driving force of the AC rotating machine (10) to a steering system (100s) of a vehicle.

12. The electric power-steering device according to claim 11,

wherein the first axis voltage command value calculator (24d) calculates the voltage command value of the first axis using a value obtained by multiplying the first deviation by a proportional gain,
wherein the proportional gain is switched between a first velocity reference value and a second velocity reference value less than the first velocity reference value, and
wherein the first axis voltage command value calculator (24d) sets the proportional gain to a value less than the first velocity reference value when a travel speed of the vehicle is less than a threshold value.

13. The electric power-steering device according to claim 12,
wherein the first axis voltage command value calculator (24d) sets the proportional gain to a value less than the first velocity reference value when the electric current command value is less than or equal to a threshold value, when steering torque is less than or equal to a threshold value, when a gradient in a graph indicating a relationship between the steering torque and a torque current command value is less than a threshold value, or when an amount of change per unit time of the steering torque is less than a threshold value.

14. The electric power-steering device according to any one of claims 11 to 13,
wherein the first axis voltage command value calculator (24d) executes the integral calculation using a result when a rotational angular velocity of the AC rotating machine (10) passes through a low-pass filter whose cutoff frequency is higher than an upper limit value of a steering frequency of the electric power-steering device.

**Patentansprüche**

1. Eine Steuervorrichtung (1, 2, 3) für eine rotierende Wechselstrommaschine (10), umfassend:

einen Wechselrichter (12), konfiguriert zum Anlegen einer Spannung an die rotierende Wechselstrommaschine (10);
einen elektrischen Stromdetektor (22), konfiguriert zum Detektieren eines durch die rotierende Wechselstrommaschine (10) fließenden elektrischen Stroms der rotierenden Maschine;

einen Erste-Achse-Spannungsbefehlswert-Berechner (24d), konfiguriert zum Berechnen eines Spannungsbefehlswerts einer ersten Achse zwischen zwei Rotationsachsen der rotierenden Wechselstrommaschine (10); und
einen Zweite-Achse-Spannungsbefehlswert-Berechner (24q), konfiguriert zum Berechnen eines Spannungsbefehlswerts einer zweiten Achse zwischen den zwei Rotationsachsen,
wobei der Erste-Achse-Spannungsbefehlswert-Berechner (24d) einen Verstärkungsänderer (E1, E2d) beinhaltet, konfiguriert zum Ändern eines Einstellwerts einer Verstärkung basierend auf einem detektierten elektrischen Stromwert der ersten Achse oder einer ersten Abweichung, die eine Abweichung zwischen einem elektrischen Strombefehlswert der ersten Achse und dem detektierten elektrischen Stromwert der ersten Achse ist,
**dadurch gekennzeichnet, dass**,
der Erste-Achse-Spannungsbefehlswert-Berechner (24d) angepasst ist zum Durchführen einer Integralberechnung unter Verwendung einer Integraleingabe, berechnet basierend auf der Verstärkung und einer zweiten Abweichung, die eine Abweichung zwischen einem elektrischen Strombefehlswert der zweiten Achse und einem detektierten elektrischen Stromwert der zweiten Achse ist, und den Spannungsbefehlswert der ersten Achse basierend auf einem Ergebnis der Integralberechnung berechnet.

2. Die Steuervorrichtung (1, 2, 3) für eine rotierende Wechselstrommaschine (10) nach Anspruch 1,

wobei die rotierende Wechselstrommaschine (10) eine rotierende Permanentmagnet-Synchronmaschine ist,
wobei die erste Achse eine d-Achse ist, die eine zentrale Achse eines Rotors und einen Magnetpol in der rotierenden Wechselstrommaschine (10) verbindet, und
wobei der Verstärkungsänderer (E1, E2d) den Einstellwert der Verstärkung verringert, wenn eine d-Achsen-elektrische-Stromabweichung, die eine Abweichung zwischen einem elektrischen Strombefehlswert der d-Achse und einem detektierten elektrischen Stromwert der d-Achse ist, einen Abweichungsschwellenwert überschreitet oder wenn der detektierte elektrische Stromwert der d-Achse einen elektrischen Stromschwellenwert zu einer negativen Seite überschreitet.

3. Die Steuervorrichtung (1, 2, 3) für eine rotierende Wechselstrommaschine (10) nach Anspruch 1 oder 2,
wobei der Erste-Achse-Spannungsbefehlswert-Berechner (24d) die Integralberechnung ausführt unter Verwendung eines Wertes erhalten durch Multiplizieren der zweiten Abweichung mit einer Rotationswinkelgeschwindigkeit der rotierenden Wechselstrommaschine (10), einer Induktivität der zweiten Achse und einer Antwortwinkelfrequenz zum Einstellen einer Frequenzantwort des elektrischen Stroms der rotierenden Maschine auf den elektrischen Strombefehlswert.

4. Die Steuervorrichtung (1, 2, 3) für eine rotierende Wechselstrommaschine (10) nach Anspruch 2, wobei der Verstärkungsänderer (E1, E2d) den Einstellwert der Verstärkung auf null setzt, wenn die d-Achsen-elektrische-Stromabweichung den Abweichungsschwellenwert überschreitet oder wenn der detektierte elektrische Stromwert der d-Achse den elektrischen Stromschwellenwert zu der negativen Seite überschreitet.

5. Die Steuervorrichtung (1, 2, 3) für eine rotierende Wechselstrommaschine (10) nach einem der Ansprüche 1 bis 4,

   wobei der Erste-Achse-Spannungsbefehlswert-Berechner (24d) den Spannungsbefehlswert der ersten Achse berechnet unter Verwendung eines Wertes, erhalten durch Multiplizieren, mit einer Proportionalverstärkung, der ersten Abweichung, die die Abweichung zwischen dem elektrischen Strombefehlswert der ersten Achse und dem detektierten elektrischen Stromwert der ersten Achse des elektrischen Stroms der rotierenden Maschine ist,
   wobei die Proportionalverstärkung umgeschaltet wird zwischen einem ersten Proportionalwert und einem zweiten Proportionalwert kleiner als der erste Proportionalwert, und
   wobei die Proportionalverstärkung auf den zweiten Proportionalwert gesetzt wird, wenn eine Spannungsamplitude, berechnet basierend auf dem Spannungsbefehlswert, größer als oder gleich einem ersten Spannungsschwellenwert ist, wenn eine Rotationsgeschwindigkeit der rotierenden Wechselstrommaschine (10) größer als oder gleich einem ersten Rotationsgeschwindigkeitsschwellenwert ist, oder wenn eine Rotationswinkelgeschwindigkeit der rotierenden Wechselstrommaschine (10) größer als oder gleich einem ersten Rotationswinkelgeschwindigkeitsschwellenwert ist.

6. Die Steuervorrichtung (1, 2, 3) für eine rotierende Wechselstrommaschine (10) nach Anspruch 5,

   wobei der Erste-Achse-Spannungsbefehlswert-Berechner (24d) die Integralberechnung ausführt unter Verwendung eines Wertes, erhalten durch Multiplizieren der zweiten Abweichung mit einer Begrenzungsverstärkung,
wobei die Begrenzungsverstärkung umgeschaltet wird zwischen einem ersten Grenzwert und einem zweiten Grenzwert kleiner als der erste Grenzwert, und
wobei die Begrenzungsverstärkung auf den zweiten Grenzwert gesetzt wird, wenn die Spannungsamplitude kleiner als oder gleich einem zweiten Spannungsschwellenwert kleiner als der erste Spannungsschwellenwert ist, wenn die Rotationsgeschwindigkeit der rotierenden Wechselstrommaschine (10) kleiner als oder gleich einem zweiten Rotationsgeschwindigkeitsschwellenwert kleiner als der erste Rotationsgeschwindigkeitsschwellenwert ist, oder wenn die Rotationswinkelgeschwindigkeit der rotierenden Wechselstrommaschine (10) kleiner als oder gleich einem zweiten Rotationswinkelgeschwindigkeitsschwellenwert kleiner als der erste Rotationswinkelgeschwindigkeitsschwellenwert ist.

7. Die Steuervorrichtung (1, 2, 3) für eine rotierende Wechselstrommaschine (10) nach Anspruch 5 oder 6,

   wobei der Wechselrichter (12) drei Sätze die drei Phasen entsprechen beinhaltet, wobei jeder der drei Sätze ein oberes Armschaltelement (Sup, Svp, Swp), ein unteres Armschaltelement (Sun, Svn, Swn) und einen Shunt-Widerstand (Ru, Rv, Rw) beinhaltet, und
   wobei der elektrische Stromdetektor (22) den elektrischen Strom der rotierenden Maschine jeder der drei Phasen detektiert basierend auf einer Spannung zwischen beiden Enden des dazu korrespondierenden Shunt-Widerstands (Ru, Rv, Rw), wenn die Spannungsamplitude kleiner als der erste Spannungsschwellenwert ist.

8. Die Steuervorrichtung (1, 2, 3) für eine rotierende Wechselstrommaschine (10) nach einem der Ansprüche 5 bis 7, wobei der Erste-Achse-Spannungsbefehlswert-Berechner (24d) die Proportionalverstärkung auf den ersten Proportionalwert setzt, wenn der elektrische Strom der rotierenden Maschine einen Schwellenwert überschreitet.

9. Die Steuervorrichtung (1, 2, 3) für eine rotierende Wechselstrommaschine (10) nach einem der Ansprüche 5 bis 7, wobei der Erste-Achse-Spannungsbefehlswert-Berechner (24d) die Proportionalverstärkung auf den ersten Proportionalwert setzt, wenn ein Fehler an mindestens einer Stelle in der Steuervorrichtung (1, 2, 3) für die rotierende Wechselstrommaschine (10) aufgetreten ist .

10. Die Steuervorrichtung (1, 2, 3) für eine rotierende Wechselstrommaschine (10) nach einem der Ansprüche 1 bis 9,
    wobei der Verstärkungsänderer (E1, E2d) konfiguriert ist zum Ändern des Einstellwerts der Verstärkung basierend auf der ersten Abweichung oder dem detektierten elektrischen Stromwert der ersten Achse und basierend auf weder der zweiten Abweichung noch dem detektierten elektrischen Stromwert der zweiten Achse.

11. Eine elektrische Servolenkvorrichtung, umfassend:

    die Steuervorrichtung (1, 2, 3) für eine rotierende Wechselstrommaschine (10) nach einem der Ansprüche 1 bis 10;
    die rotierende Wechselstrommaschine (10); und
    einen Antriebskraftübertragungsmechanismus (104), konfiguriert zum Übertragen einer Antriebskraft der rotierenden Wechselstrommaschine (10) auf ein Lenksystem (100s) eines Fahrzeugs.

12. Die elektrische Servolenkvorrichtung nach Anspruch 11,

    wobei der Erste-Achse-Spannungsbefehlswert-Berechner (24d) den Spannungsbefehlswert der ersten Achse berechnet unter Verwendung eines Wertes, erhalten durch Multiplizieren der ersten Abweichung mit einer Proportionalverstärkung,
    wobei die Proportionalverstärkung umgeschaltet wird zwischen einem ersten Geschwindigkeitsreferenzwert und einem zweiten Geschwindigkeitsreferenzwert kleiner als der erste Geschwindigkeitsreferenzwert, und
    wobei der Erste-Achse-Spannungsbefehlswert-Berechner (24d) die Proportionalverstärkung auf einen Wert setzt, der kleiner als der erste Geschwindigkeitsreferenzwert ist, wenn eine Fahrgeschwindigkeit des Fahrzeugs kleiner als ein Schwellenwert ist.

13. Die elektrische Servolenkvorrichtung nach Anspruch 12,
    wobei der Erste-Achse-Spannungsbefehlswert-Berechner (24d) die Proportionalverstärkung auf einen Wert setzt, der kleiner als der erste Geschwindigkeitsreferenzwert ist, wenn der elektrische Strombefehlswert kleiner als oder gleich einem Schwellenwert ist, wenn ein Lenkdrehmoment kleiner als oder gleich einem Schwellenwert ist, wenn ein Gradient in einem Graphen, der eine Beziehung zwischen dem Lenkdrehmoment und einem Drehmomentstrombefehlswert angibt, kleiner als ein Schwellenwert ist, oder wenn ein Änderungsbetrag pro Zeiteinheit des Lenkdrehmoments kleiner als ein Schwellenwert ist.

14. Die elektrische Servolenkvorrichtung nach einem der Ansprüche 11 bis 13,
    wobei der Erste-Achse-Spannungsbefehlswert-Berechner (24d) die Integralberechnung ausführt unter Verwendung eines Ergebnisses, wenn eine Rotationswinkelgeschwindigkeit der rotierenden Wechselstrommaschine (10) einen Tiefpassfilter passiert, dessen Grenzfrequenz höher ist als ein oberer Grenzwert einer Lenkfrequenz der elektrischen Servolenkvorrichtung.

**Revendications**

1. Dispositif de commande (1, 2, 3) pour une machine tournante à courant alternatif (10), comprenant :

   un onduleur (12) configuré pour appliquer une tension à la machine tournante à courant alternatif (10) ;
   un détecteur de courant électrique (22) configuré pour détecter un courant électrique de machine tournante circulant à travers la machine tournante à courant alternatif (10) ;
   un calculateur de valeur de commande de tension de premier axe (24d) configuré pour calculer une valeur de commande de tension d'un premier axe entre deux axes de rotation de la machine tournante à courant alternatif (10) ; et
   un calculateur de valeur de commande de tension de deuxième axe (24q) configuré pour calculer une valeur de commande de tension d'un deuxième axe entre les deux axes de rotation, dans lequel
   le calculateur de valeur de commande de tension de premier axe (24d) comprend un modificateur de gain (E1, E2d) configuré pour modifier une valeur de consigne d'un gain sur la base d'une valeur de courant électrique détectée du premier axe ou d'un premier écart qui est un écart entre une valeur de commande de courant électrique du premier axe et la valeur de courant électrique détectée du premier axe, **caractérisé en ce que**
   le calculateur de valeur de commande de tension de premier axe (24d) est adapté pour effectuer un calcul intégral en utilisant une entrée intégrale calculée sur la base du gain et d'un deuxième écart, qui est un écart entre une valeur de commande de courant électrique du deuxième axe et une valeur de courant électrique détectée du deuxième axe, et calcule la valeur de commande de tension du premier axe sur la base d'un résultat du calcul intégral.

2. Dispositif de commande (1, 2, 3) pour une machine tournante à courant alternatif (10) selon la revendication 1,

dans lequel la machine tournante à courant alternatif (10) est une machine tournante synchrone à aimant permanent,
dans lequel le premier axe est un axe d qui relie un axe central d'un rotor et un pôle magnétique dans la machine tournante à courant alternatif (10), et
dans lequel le modificateur de gain (E1, E2d) diminue la valeur de consigne du gain lorsqu'un écart de courant électrique d'axe d, qui est un écart entre une valeur de commande de courant électrique d'axe d et une valeur de courant électrique détectée d'axe d, dépasse une valeur seuil d'écart ou lorsque la valeur de courant électrique détectée de l'axe d dépasse une valeur seuil de courant électrique vers un côté négatif.

3. Dispositif de commande (1, 2, 3) pour une machine tournante à courant alternatif (10) selon la revendication 1 ou 2,
dans lequel le calculateur de valeur de commande de tension de premier axe (24d) exécute le calcul intégral en utilisant une valeur obtenue en multipliant le deuxième écart par une vitesse angulaire de rotation de la machine tournante à courant alternatif (10), une inductance du deuxième axe, et une fréquence angulaire de réponse pour ajuster une fréquence de réponse du courant électrique de machine tournante à la valeur de commande de courant électrique.

4. Dispositif de commande (1, 2, 3) pour une machine tournante à courant alternatif (10) selon la revendication 2,
dans lequel le modificateur de gain (E1, E2d) règle la valeur de consigne du gain sur zéro lorsque l'écart de courant électrique d'axe d dépasse la valeur seuil d'écart ou lorsque la valeur de courant électrique détectée de l'axe d dépasse la valeur seuil de courant électrique vers le côté négatif.

5. Dispositif de commande (1, 2, 3) pour une machine tournante à courant alternatif (10) selon l'une quelconque des revendications 1 à 4,

dans lequel le calculateur de valeur de commande de tension de premier axe (24d) calcule la valeur de commande de tension du premier axe en utilisant une valeur obtenue en multipliant, par un gain proportionnel, le premier écart qui est l'écart entre la valeur de commande de courant électrique du premier axe et la valeur de courant électrique détectée du premier axe du courant électrique de machine tournante,
dans lequel le gain proportionnel est commuté entre une première valeur proportionnelle et une deuxième valeur proportionnelle inférieure à la première valeur proportionnelle, et
dans lequel le gain proportionnel est réglé sur la deuxième valeur proportionnelle lorsqu'une amplitude de tension calculée sur la base de la valeur de commande de tension est supérieure ou égale à une première valeur seuil de tension, lorsqu'une vitesse de rotation de la machine tournante à courant alternatif (10) est supérieure ou égale à une première valeur seuil de vitesse de rotation, ou lorsqu'une vitesse angulaire de rotation de la machine tournante à courant alternatif (10) est supérieure ou égale à une première valeur seuil de vitesse angulaire de rotation.

6. Dispositif de commande (1, 2, 3) pour une machine tournante à courant alternatif (10) selon la revendication 5,

dans lequel le calculateur de valeur de commande de tension de premier axe (24d) exécute le calcul intégral en utilisant une valeur obtenue en multipliant le deuxième écart par un gain limite,
dans lequel le gain limite est commuté entre une première valeur limite et une deuxième valeur limite inférieure à la première valeur limite, et
dans lequel le gain limite est réglé sur la deuxième valeur limite lorsque l'amplitude de tension est inférieure ou égale à une deuxième valeur seuil de tension inférieure à la première valeur seuil de tension, lorsque la vitesse de rotation de la machine tournante à courant alternatif (10) est inférieure ou égale à une deuxième valeur seuil de vitesse de rotation inférieure à la première valeur seuil de vitesse de rotation, ou lorsque la vitesse angulaire de rotation de la machine tournante à courant alternatif (10) est inférieure ou égale à une deuxième valeur seuil de vitesse angulaire de rotation inférieure à la première valeur seuil de vitesse angulaire de rotation.

7. Dispositif de commande (1, 2, 3) pour une machine tournante à courant alternatif (10) selon la revendication 5 ou 6,

dans lequel l'onduleur (12) comprend trois ensembles correspondant à trois phases, chacun des trois ensembles comprenant un élément de commutation de branche supérieur (Sup, Svp, Swp), un élément de commutation de branche inférieur (Sun, Svn, Swn) et une résistance shunt (Ru, Rv, Rw), et

dans lequel le détecteur de courant électrique (22) détecte le courant électrique de machine tournante de chacune des trois phases sur la base d'une tension entre deux extrémités de la résistance shunt (Ru, Rv, Rw) qui lui correspond lorsque l'amplitude de tension est inférieure à la première valeur seuil de tension.

8. Dispositif de commande (1, 2, 3) pour une machine tournante à courant alternatif (10) selon l'une quelconque des revendications 5 à 7, dans lequel le calculateur de valeur de commande de tension de premier axe (24d) règle le gain proportionnel sur la première valeur proportionnelle lorsque le courant électrique de machine tournante dépasse une valeur seuil.

9. Dispositif de commande (1, 2, 3) pour une machine tournante à courant alternatif (10) selon l'une quelconque des revendications 5 à 7, dans lequel le calculateur de valeur de commande de tension de premier axe (24d) règle le gain proportionnel sur la première valeur proportionnelle lorsqu'une défaillance s'est produite en au moins un emplacement du dispositif de commande (1, 2, 3) pour la machine tournante à courant alternatif (10).

10. Dispositif de commande (1, 2, 3) pour une machine tournante à courant alternatif (10) selon l'une quelconque des revendications 1 à 9, dans lequel le modificateur de gain (E1, E2d) est configuré pour modifier la valeur de consigne du gain sur la base du premier écart ou de la valeur de courant électrique détectée du premier axe, et sans tenir compte ni du deuxième écart ni de la valeur de courant électrique détectée du deuxième axe.

11. Dispositif de direction assistée électrique, comprenant:

le dispositif de commande (1, 2, 3) pour une machine tournante à courant alternatif (10) selon l'une quelconque des revendications 1 à 10 ; la machine tournante à courant alternatif (10) ; et un mécanisme de transmission de force d'entraînement (104) configuré pour transmettre une force d'entraînement de la machine tournante à courant alternatif (10) à un système de direction (100s) d'un véhicule.

12. Dispositif de direction assistée électrique selon la revendication 11,

dans lequel le calculateur de valeur de commande de tension de premier axe (24d) calcule la valeur de commande de tension du premier axe en utilisant une valeur obtenue en multipliant le premier écart par un gain proportionnel,

dans lequel le gain proportionnel est commuté entre une première valeur de référence de vitesse et une deuxième valeur de référence de vitesse inférieure à la première valeur de référence de vitesse, et

dans lequel le calculateur de valeur de commande de tension de premier axe (24d) règle le gain proportionnel sur une valeur inférieure à la première valeur de référence de vitesse lorsqu'une vitesse de déplacement du véhicule est inférieure à une valeur seuil.

13. Dispositif de direction assistée électrique selon la revendication 12, dans lequel le calculateur de valeur de commande de tension de premier axe (24d) règle le gain proportionnel sur une valeur inférieure à la première valeur de référence de vitesse lorsque la valeur de commande de courant électrique est inférieure ou égale à une valeur seuil, lorsqu'un couple de direction est inférieur ou égal à une valeur seuil, lorsqu'une pente dans un graphique indiquant une relation entre le couple de direction et une valeur de commande de courant de couple est inférieure à une valeur seuil, ou lorsqu'une quantité de variation par unité de temps du couple de direction est inférieure à une valeur seuil.

14. Dispositif de direction assistée électrique selon l'une quelconque des revendications 11 à 13, dans lequel le calculateur de valeur de commande de tension de premier axe (24d) exécute le calcul intégral en utilisant un résultat obtenu lorsqu'une vitesse angulaire de rotation de la machine tournante à courant alternatif (10) passe par un filtre passe-bas dont une fréquence de coupure est supérieure à une valeur limite supérieure d'une fréquence de direction du dispositif de direction assistée électrique.

# FIG. 1

# FIG. 2

# FIG. 3

EP 4 496 209 B1

FIG. 4

FIG. 5

```
        ┌─────────────┐
        │    START    │
        └──────┬──────┘
               │
               ▼
   ┌───────────────────────────┐
   │   Vmin = min(vu,vv,vw)     │────── S11
   └───────────┬───────────────┘
               │
               ▼
   ┌───────────────────────────┐
   │   voffset = 0.5Vdc−Vmin    │────── S12
   └───────────┬───────────────┘
               │
               ▼
   ┌───────────────────────────┐
   │      vu' = vu−voffset      │
   │      vv' = vv−voffset      │────── S13
   │      vw' = vw−voffset      │
   └───────────┬───────────────┘
               │
               ▼
        ┌─────────────┐
        │     END     │
        └─────────────┘
```

FIG. 6

# FIG. 7

TRANSMISSION CHARACTERISTICS
FROM iq_ref TO iq

BODE PLOT DIAGRAM

FIG. 8

FIG. 9

# FIG. 10

FIG. 11

FIG. 12

EP 4 496 209 B1

# FIG. 13

## FIG. 14

RINGING OCCURS FOR SEVERAL MICROSECONDS ($\mu$s)
IMMEDIATELY AFTER Gxn IS TURNED ON (IMMEDIATELY AFTER Gxn
CHANGES FROM 0 TO 1) AND CORRECT ELECTRIC CURRENT CANNOT
BE ACQUIRED FROM BOTH-END VOLTAGE

# FIG. 15

FIG. 16

## FIG. 17

## FIG. 18

FIG. 19

EP 4 496 209 B1

FIG. 20

**REFERENCES CITED IN THE DESCRIPTION**

**Patent documents cited in the description**

- JP 2010119245 A
- JP 2009189146 A
- JP 2007274863 A